(19) Europäisches Patentamt
European Patent Office
Office européen des brevets

(11) **EP 4 749 537 A1**

(12) **EUROPEAN PATENT APPLICATION**
published in accordance with Art. 153(4) EPC

(43) Date of publication:
**27.05.2026 Bulletin 2026/22**

(21) Application number: **23945891.2**

(22) Date of filing: **20.07.2023**

(51) International Patent Classification (IPC):
***G06N 10/80*** *(2022.01)* ***G06F 9/48*** *(2006.01)*

(52) Cooperative Patent Classification (CPC):
**G06F 9/48; G06N 10/80**

(86) International application number:
**PCT/JP2023/026491**

(87) International publication number:
**WO 2025/017888 (23.01.2025 Gazette 2025/04)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **FUJITSU LIMITED**
**Kawasaki-shi, Kanagawa 211-8588 (JP)**

(72) Inventor: **NODA, Kunihiro**
**Kawasaki-shi, Kanagawa 211-8588 (JP)**

(74) Representative: **Haseltine Lake Kempner LLP**
**Cheapside House**
**138 Cheapside**
**London EC2V 6BJ (GB)**

(54) **JOB SCHEDULING PROGRAM, JOB SCHEDULING METHOD, AND INFORMATION PROCESSING DEVICE**

(57) Efficient execution of quantum computation jobs is achieved.

An information processing apparatus (10) enqueues a job (3a, 3b) indicating execution of quantum computation into a first queue (1). The information processing apparatus (10) converts, for each job (4a to 4d) included in the first queue (1), a procedure of quantum computation to be performed by that job into an instruction sequence executable by a quantum computer (6). The information processing apparatus (10) enqueues the job (4a to 4d), for which the conversion is complete, into a second queue (2). The information processing apparatus (10) determines, based on a predetermined criterion, for each job (5a to 5d) sequentially selected from the head of the second queue (2), which qubit to use for executing the job and whether to execute the job immediately. The information processing apparatus (10) instructs, upon determining that the job is to be executed immediately, the quantum computer (6) to execute the job.

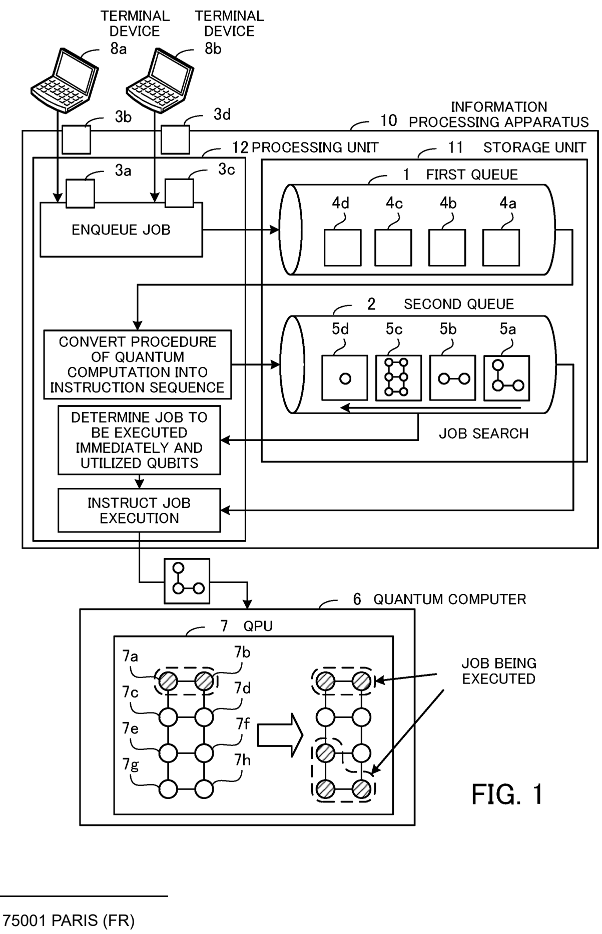

FIG. 1

EP 4 749 537 A1

## Description

### Technical Field

The embodiments discussed herein relate to a job scheduling program, a job scheduling method, and an information processing apparatus.

### Background Art

Quantum computers are accessible, for example, via cloud computing services. Hereinafter, a computer system that provides a quantum computing service using a quantum computer is referred to as a quantum computing system. The quantum computing system is, for example, a hybrid system in which a classical computer (von Neumann computer) and a quantum computer are combined.

A user uses a terminal device to create a quantum circuit corresponding to a problem to be solved. The terminal device transmits, to the quantum computing system, a request to execute a job for performing quantum computation based on the quantum circuit. In the quantum computing system, the classical computer submits (enqueues) the job indicated in the received execution request, into an execution queue. The classical computer performs job scheduling for jobs enqueued into the execution queue, and causes the quantum computer to execute the jobs in an order based on the job scheduling result. The quantum computer performs the quantum computation corresponding to each requested job, and transmits the execution result to the classical computer. The classical computer transmits the result of the quantum computation to the terminal device used by the user.

The quantum computing system is capable of performing job scheduling so as to execute a plurality of jobs in parallel using a plurality of qubits provided in a quantum processing unit (QPU). A job scheduling technique for causing a quantum computer to execute a plurality of jobs in parallel is referred to as quantum multiprogramming.

Through the quantum multiprogramming, the classical computer allocates qubits within the QPU to jobs to be executed in parallel such that the qubits to be used do not overlap among the jobs. This enables parallel execution of the jobs and improves the throughput of job execution requests.

As a technique related to management of execution of quantum computation, for example, there has been proposed a program that causes a classical computer to execute a selection step of selecting a calculator for performing given processing based on needed quantum bits or quantum volume, and other steps. Further, there has been proposed a quantum computer task manager that maintains and collects data regarding a quantum computing system and provides the data, upon request, to other tasks executing on the quantum computing system. Still further, there has been proposed a system that facilitates quantum computing job scheduling.

### Citation List

### Patent Literatures

PTL1: International Publication Pamphlet No. WO 2021/125189
PTL2: U.S. Patent Application Publication No. 2002/0201655
PTL3: Japanese National Publication of International Patent Application No. 2022-511613

### Summary of Invention

### Technical Problem

A quantum circuit created according to a problem to be solved become executable after undergoing preprocessing that includes conversion and others according to the hardware of a quantum computer. The preprocessing includes processes such as converting quantum gates included in the quantum circuit into quantum gates supported by the quantum computer, converting the structure of the quantum circuit so as to perform gate operations satisfying hardware limitations, optimizing the circuit, and converting the operations of the quantum circuit into an instruction sequence for operating qubits.

Conventional quantum multiprogramming does not take into account the time needed for such preprocessing. Therefore, there may be a waiting time until the preprocessing of all jobs scheduled to be executed in parallel is completed, and thus the parallelization does not always improve the job execution as intended.

In one aspect, the present disclosure is directed to enabling efficient execution of quantum computation jobs.

Solution to Problem

In one aspect, the following job scheduling program is provided.

A computer enqueues a job indicating execution of quantum computation into a first queue. The computer converts, for the job included in the first queue, a procedure of the quantum computation to be performed by the job into an instruction sequence executable by a quantum computer. The computer enqueues the job, for which the conversion is complete, into a second queue. The computer determines, based on a predetermined criterion, for a job sequentially selected from the head of the second queue, which qubits, serving as utilized qubits, to use for executing the job and whether to execute the job immediately. Then, the computer instructs, upon determining that the job is to be executed immediately, the quantum computer to perform quantum computation using the utilized qubits, based on an instruction sequence corresponding to the job.

Advantageous Effects of Invention

According to one aspect, it is possible to execute quantum computation jobs efficiently.

The above and other objects, features and advantages of the present disclosure will become apparent from the following description taken in conjunction with the accompanying drawings which illustrate, by way of example, preferred embodiments of the disclosure.

Brief Description of Drawings

FIG. 1 illustrates an example of a job scheduling method according to a first embodiment.
FIG. 2 illustrates an example of the configuration of a quantum computing system.
FIG. 3 illustrates an example of the hardware of devices constituting the quantum computing system.
FIG. 4 illustrates the relationship between a quantum circuit and the NN constraint.
FIG. 5 illustrates an example of error for each qubit.
FIG. 6 illustrates an example of job scheduling without taking preprocessing into account.
FIG. 7 illustrates an example of quantum multiprogramming.
FIG. 8 illustrates an example of quantum multiprogramming performed on the user side.
FIG. 9 illustrates an example of quantum multiprogramming implemented on the service provider side.
FIG. 10 is a block diagram illustrating an example of a quantum multiprogramming function according to the second embodiment.
FIG. 11 illustrates an example of job queuing.
FIG. 12 is a flowchart illustrating a processing procedure for a process performed upon reception of a job execution request.
FIG. 13 is a flowchart illustrating an example procedure for preprocessing.
FIG. 14 illustrates an example of avoiding a conflict with respect to utilized qubits during preprocessing.
FIG. 15 is a flowchart illustrating an example procedure for an execution job selection process.
FIG. 16 illustrates an example of determination regarding a "first criterion".
FIG. 17 illustrates an example of determination regarding a "second criterion".
FIG. 18 illustrates an example in which a range of subsequent jobs is limited in making a determination regarding the "second criterion".
FIG. 19 illustrates an example in which a conflict with a subsequent job with respect to utilized qubits is permitted.
FIG. 20 illustrates an example in which a range of jobs to be taken as subsequent jobs is set based on preprocessing time.
FIG. 21 illustrates an example of determination regarding a "third criterion".
FIG. 22 illustrates an example of determination regarding a "fourth criterion".
FIG. 23 illustrates an example of determination regarding a "fifth criterion".

Description of Embodiments

Hereinafter, embodiments will be described with reference to the drawings. A plurality of embodiments may be combined unless they exclude each other.

[First Embodiment]

A first embodiment provides a job scheduling method capable of efficiently executing quantum computation jobs using a quantum computer.

FIG. 1 illustrates an example of the job scheduling method according to the first embodiment. FIG. 1 illustrates an information processing apparatus 10 that performs the job scheduling method. The information processing apparatus 10 is able to implement the job scheduling method by executing, for example, a job scheduling program.

The information processing apparatus 10 is, for example, a von Neumann computer or a classical computer. The information processing apparatus 10 includes a storage unit 11 and a processing unit 12. The storage unit 11 is, for example, a memory or a storage device included in the information processing apparatus 10. The processing unit 12 is, for example, a processor or an arithmetic circuit included in the information processing apparatus 10.

A first queue 1 and a second queue 2 are provided in the storage unit 11. The first queue 1 stores conversion-waiting jobs 4a to 4d that have not yet undergone preprocessing. The second queue 2 stores execution-waiting jobs 5a to 5d that have already undergone the preprocessing.

The processing unit 12 performs job scheduling. For example, when receiving jobs 3a to 3d indicating execution of quantum computation, the processing unit 12 enqueues the jobs 3a to 3d as the conversion-waiting jobs 4a to 4d into the first queue 1.

The processing unit 12 preprocesses the conversion-waiting jobs 4a to 4d waiting in the first queue 1. For example, the processing unit 12 converts, for each conversion-waiting job 4a to 4d, a procedure of quantum computation to be performed by the conversion-waiting job into an instruction sequence executable by a quantum computer 6. The instruction sequence is a series of instructions for performing the operations of quantum gates defined in a quantum circuit. The processing unit 12 enqueues the conversion-waiting jobs 4a to 4d, for which the conversion is complete, as the execution-waiting jobs 5a to 5d into the second queue 2.

The processing unit 12 determines, based on predetermined criteria, for each of the execution-waiting jobs 5a to 5d sequentially selected from the head of the second queue 2, which qubits, serving as utilized qubits, to use for executing the job and whether to execute the job immediately. For example, the processing unit 12 determines whether a first criterion is satisfied. The first criterion is about whether a job is executable with currently available hardware resources of the quantum computer 6. For example, for each of the execution-waiting jobs 5a to 5d, the first criterion is that there exists a combination of idle qubits that satisfies the constraints related to the connectivity of qubits for executing that job and that are not used for any other job currently being executed.

Then, when determining that an execution-waiting job is to be executed immediately, the processing unit 12 instructs the quantum computer 6 to perform quantum computation using the determined utilized qubits, based on the instruction sequence corresponding to the execution-waiting job.

As described above, the processing unit 12 enqueues jobs that have undergone the preprocessing, into the second queue 2, and determines, from the second queue 2, which job to execute immediately and which qubits to use for executing that job. Then, the processing unit 12 immediately outputs an execution instruction for the determined job. As a result, the job that is executable immediately does not need to wait for completion of preprocessing. That is, efficient job execution is achieved.

In the example of FIG. 1, a QPU 7 included in the quantum computer 6 has eight qubits 7a to 7h. It is assumed that two qubits 7a and 7b are currently used in quantum computation for another job. The processing unit 12 sequentially determines, starting from the execution-waiting job 5a at the head of the second queue 2, whether to execute each execution-waiting job immediately.

For example, it is assumed that the execution of the execution-waiting job 5a needs to use three qubits and to satisfy a hardware constraint that one of the three qubits needs to be connected to each of the other two qubits. The processing unit 12 determines whether it is possible to combine idle qubits within the QPU 7 as a combination of qubits capable of executing the execution-waiting job 5a. For example, with a combination of the qubits 7e, 7g, and 7h, the execution-waiting job 5a is executable immediately. Therefore, the processing unit 12 determines that the execution-waiting job 5a is to be executed immediately and that the qubits 7e, 7g, and 7h are utilized qubits for the execution.

Then, the processing unit 12 removes the execution-waiting job 5a from the second queue 2, and instructs the quantum computer 6 to execute the execution-waiting job 5a. Then, the quantum computer 6 operates the qubits 7e, 7g, and 7h in accordance with an instruction sequence based on the procedure of quantum computation for the execution-waiting job 5a. By doing so, the quantum computation is performed. In this example, when the execution-waiting job 5a is determined to be executable, the execution-waiting job 5a is executed immediately without waiting for the completion of preprocessing of other jobs. Consequently, the job is efficiently executed.

The processing unit 12 is also able to determine whether a second criterion is satisfied, using information on subsequent jobs, as a criterion about whether to execute the execution-waiting jobs 5a to 5d immediately. Among the jobs 3a to 3d submitted from the terminal devices 8a and 8b, some may specify qubits to be used. For example, a job may specify the use of a qubit with the lowest error rate. In this case, the qubit to be used for the job is fixed before the job scheduling, regardless of the status of idle qubits. For example, the processing unit 12 may determine whether an execution-waiting job under examination satisfies the second criterion, the second criterion being that the job satisfies the first criterion without using any qubits that are scheduled to be used for subsequent jobs whose immediate execution is to be determined later.

As a result, it is possible to avoid a conflict with the subsequent jobs with respect to utilized qubits. By avoiding such a conflict, it becomes possible to efficiently execute subsequent jobs for which qubits to be used have been fixed.

In this connection, the processing unit 12 may impose a limitation on the range of subsequent jobs to be considered. For example, using an arrangement in which the conversion-waiting jobs 4a to 4d registered in the first queue 1 follow the execution-waiting jobs 5a to 5d registered in the second queue 2, the processing unit 12 takes jobs within M positions (M is a natural number) from the head, as subsequent jobs. In this case, each of the subsequent jobs may be an execution-waiting job other than the execution-waiting job under examination or a conversion-waiting job. By limiting the range of subsequent jobs in this manner, for example, the processing unit 12 is able to eliminate the need to determine whether a conflict occurs with respect to qubits scheduled to be used for jobs that are clearly still a considerable time away from execution. Accordingly, it is possible to appropriately determine whether immediate execution is possible.

Alternatively, the processing unit 12 may determine, based on the time to preprocessing completion, whether to take each conversion-waiting job as a subsequent job. For example, among the conversion-waiting jobs 4a to 4d included in the first queue 1, the processing unit 12 may take, as subsequent jobs, conversion-waiting jobs for which the conversion of a procedure of quantum computation to be performed into an instruction sequence is expected to be completed within the execution time of the execution-waiting job under examination, measured from the current time. In this case, execution-waiting jobs other than the execution-waiting job under examination may also be included as the subsequent jobs. This eliminates the need to take into account the influence of qubits to be used for conversion-waiting jobs whose preprocessing will not be completed before completion of the execution of the execution-waiting job under examination. As a result, the accuracy of determining whether immediate execution is possible is improved.

Further, the processing unit 12 may apply the second criterion related to subsequent jobs in a flexible manner, rather than strictly applying the second criterion. For example, there is a case where, if the use of qubits scheduled to be used for subsequent jobs is avoided, no execution-waiting job exists that is immediately executable, except for the subsequent jobs for which the qubits to be used have already been allocated. In this case, the processing unit 12 may allow immediate execution of an execution-waiting job that does not satisfy the second criterion. This prevents an unfair situation where, for example, a preceding job is executed later than a subsequent job that uses a large number of qubits.

Furthermore, the processing unit 12 may determine utilized qubits to be used for an execution-waiting job determined to be executed immediately, such that as many contiguous idle qubits as possible remain. For example, there may be a plurality of combinations of idle qubits that satisfy the first criterion. In this case, the processing unit 12 counts, for each combination, the number of contiguous idle qubits, which connect one another, remaining after excluding the idle qubits included in that combination. Then, for each of the plurality of combinations of qubits, the processing unit 12 determines the utilized qubits for the execution-waiting job under examination, based on a third criterion related to the number of remaining contiguous idle qubits. For example, the processing unit 12 may select, as the utilized qubits, a combination of qubits that leaves the largest number of contiguous idle qubits remaining. This enhances the degree of parallelism of job execution.

In addition, the processing unit 12 may determine whether to execute a job immediately, based on a predicted output reliability of a result of quantum computation. For example, the processing unit 12 generates a plurality of combinations of qubits available for the execution-waiting job under examination. Next, based on the error rates of operations on the plurality of qubits 7a to 7h in the quantum computer 6, the processing unit 12 calculates, for each combination, a predicted output reliability indicating a reliability of a computation result that is obtained by performing the quantum computation using the qubits belonging to that combination. Then, the processing unit 12 determines, based on a fourth criterion related to the predicted output reliability, whether to execute the execution-waiting job under examination immediately. For example, in the case where there is a combination of qubits that achieves a reduction in predicted output reliability, relative to non-parallel execution, that is less than or equal to a predetermined threshold, the processing unit 12 determines that the immediate execution is possible. This minimizes a reduction in reliability caused by the parallel execution.

The processing unit 12 is also able to determine whether the immediate execution of the execution-waiting job under examination is possible, taking into account the influence of crosstalk. For example, among idle qubits not used for currently executing jobs, the processing unit 12 identifies qubits that are separated by at least a predetermined distance from the qubits used for the currently executing jobs. Then, the processing unit 12 determines whether the execution-waiting job under examination satisfies a fifth criterion, the fifth criterion being that the job satisfies the first criterion by using the identified qubits. By applying this fifth criterion, the job under examination is executed immediately only in the case where the influence of crosstalk is relatively small. This suppresses a decrease in accuracy caused due to the influence of crosstalk.

[Second Embodiment]

A second embodiment relates to a quantum computing system in which a classical computer and quantum computers operate in a coordinated manner to efficiently perform quantum computation.

FIG. 2 illustrates an example of the configuration of a quantum computing system. A quantum computing system 300 is a computer system using quantum devices. The quantum computing system 300 includes a classical computer 100 and a plurality of quantum computers 210, 220, .... Terminal devices 401, 402, ... are connected to the classical computer 100 via a network 20. The terminal devices 401, 402, ... are computers that are used by users who request the quantum computing system 300 to perform quantum computation. The classical computer 100 receives computation requests including quantum circuits from the terminal devices 401, 402, .... Each quantum circuit is an arrangement of elements such as gates, which indicates a sequence of operations on qubits. Each qubit is capable of representing a superposition state of a "0" state and a "1" state.

The classical computer 100 instructs the quantum computers 210, 220 ... to perform quantum computation according to the quantum circuits received from the terminal devices 401, 402, .... In addition, the classical computer 100 acquires the measurement result of each qubit from the quantum computers 210, 220 ....

Each of the quantum computers 210, 220 ... has a plurality of qubits and a device for operating the plurality of qubits. The plurality of qubits included in the quantum computers 210, 220 ... are implemented using, for example, a superconducting method, a trapped-ion method, a diamond spin method, or another.

FIG. 3 illustrates an example of the hardware of devices constituting the quantum computing system. The classical computer 100 is entirely controlled by a processor 101. A memory 102 and a plurality of peripheral devices are connected to the processor 101 via a bus 109. The processor 101 may be a multiprocessor. The processor 101 is, for example, a central processing unit (CPU), a micro processing unit (MPU), or a digital signal processor (DSP). At least a part of the functions implemented by the processor 101 executing a program may be implemented by an electronic circuit such as an application specific integrated circuit (ASIC) or a programmable logic device (PLD).

The memory 102 is used as a main storage device of the classical computer 100. The memory 102 temporarily stores at least a part of an operating system (OS) program and application programs to be executed by the processor 101. The memory 102 also stores various data to be used by the processor 101 during its operation. As the memory 102, for example, a volatile semiconductor storage device such as a random access memory (RAM) is used.

The peripheral devices connected to the bus 109 include a storage device 103, a graphics processing unit (GPU) 104, an input interface 105, an optical drive device 106, a device connection interface 107, and network interfaces 108a and 108b.

The storage device 103 electrically or magnetically writes and reads data to and from a built-in recording medium. The storage device 103 is used as an auxiliary storage device of the classical computer 100. The storage device 103 stores OS programs, application programs, and various data. As the storage device 103, for example, a hard disk drive (HDD) or a solid state drive (SSD) may be used.

The GPU 104 is an arithmetic device that performs image processing. The GPU 104 is an example of a graphic controller. A monitor 21 is connected to the GPU 104. The GPU 104 displays images on the screen of the monitor 21 in accordance with instructions from the processor 101. Examples of the monitor 21 include an organic electro luminescence (EL) display device and a liquid crystal display device.

A keyboard 22 and a mouse 23 are connected to the input interface 105. The input interface 105 transmits signals received from the keyboard 22 and the mouse 23 to the processor 101. The mouse 23 is an example of a pointing device, and other pointing devices may be used. Examples of other pointing devices include a touch panel, a tablet, a touch pad, and a track ball.

The optical drive device 106 reads data recorded on an optical disc 24 or writes data to the optical disc 24 using laser light or the like. The optical disc 24 is a portable recording medium on which data is recorded so as to be readable by reflection of light. The optical disc 24 may be a digital versatile disc (DVD), a DVD-RAM, a compact disc read only memory (CD-ROM), a CD-recordable (CD-R), CD-rewritable (CD-RW), or another.

The device connection interface 107 is a communication interface for connecting peripheral devices to the classical computer 100. For example, a memory device 25 and a memory reader/writer 26 may be connected to the device connection interface 107. The memory device 25 is a recording medium having a function of communicating with the device connection interface 107. The memory reader/writer 26 is a device that writes data to a memory card 27 or reads data from the memory card 27. The memory card 27 is a card-type recording medium.

The network interface 108a is connected to the network 20. The network interface 108a transmits and receives data to and from other computers or communication devices via the network 20. The network interface 108a is a wired communication interface connected to a wired communication device such as a switch or a router via a cable. Alternatively, the network interface 108a may be a wireless communication interface communicatively connected to a wireless communication device such as a base station or an access point by radio waves.

The network interface 108b is an interface for connecting to the quantum computers 210, 220 .... The processor 101 transmits quantum circuits to the quantum computers 210, 220 ... via the network interface 108b, to cause the quantum computers 210, 220 ... to perform quantum computation. The processor 101 acquires the results of the quantum computation via the network interface 108b.

The classical computer 100 having the above-described hardware is able to implement the processing functions of the second embodiment. The information processing apparatus 10 described in the first embodiment is also ale to be implemented with hardware similar to that of the classical computer 100 illustrated in FIG. 3.

The classical computer 100 implements the processing functions of the second embodiment by executing a program recorded on a computer-readable recording medium, for example. The program describing the processing content to be executed by the classical computer 100 may be recorded on various recording media. For example, the program to be executed by the classical computer 100 may be stored in the storage device 103. The processor 101 loads at least a part of the program from the storage device 103 into the memory 102 and executes the program. The program to be executed by the classical computer 100 may be recorded on a portable recording medium such as the optical disc 24, the memory device 25, or the memory card 27. The program stored on the portable recording medium becomes executable after being installed in the storage device 103 under the control of the processor 101, for example. Alternatively, the processor 101 may execute the program while reading it directly from a portable recording medium.

The quantum computer 210 includes a control device 211 and a QPU 212. The control device 210 performs gate operations on qubits provided in a quantum device according to a quantum circuit. The QPU 212 has a plurality of qubits. Similarly, the other quantum computers 210, ... have a control device and a QPU.

Execution requests for quantum computation jobs are transmitted from the terminal devices 401, 402, ... to the quantum computing system 300. The content of the quantum computation to be performed is represented as a quantum circuit. The quantum circuit is a type of representation of processing that is performed in a quantum computer.

The quantum circuits indicated in the execution requests are converted so as to satisfy physical constraints that depend on the hardware of the quantum computers 210, 220, .... One of the physical constraints is the nearest neighbor (NN) constraint. The NN constraint is a constraint that the operation of a two-qubit gate is executable only on two qubits adjacent to each other on hardware.

FIG. 4 illustrates the relationship between a quantum circuit and the NN constraint. In a quantum circuit 41, qubit numbers "q1, q2, q3" of qubits to be operated are arranged vertically. In the quantum circuit 41, operations on each qubit are depicted in chronological order from left to right. Each operation is referred to as a quantum gate. A quantum gate that acts on N qubits (N is a natural number) is referred to as an N-qubit gate.

In the quantum circuit 41 illustrated in FIG. 4, a Hadamard gate 41a is first placed on the qubit with the qubit number "q1". Next, a CNOT gate 41b is placed on the qubit with the qubit number "q1" used as a control bit and the qubit with the qubit number "q2" used as a target bit. Next, a CNOT gate 41c is placed on the qubit with the qubit number "q2" used as a control bit and the qubit with the qubit number "q3" used as a target bit. Finally, measurement operations 41d to 41f are illustrated for the qubits with the qubit numbers "q1, q2, and q3". The measurement operations 41d to 41f are operations for obtaining the states of the qubits.

A guest graph 42, which represents the qubit connectivity needed for the execution of the quantum circuit 41, is defined on the basis of the pairs of qubits on which the gate operations of the two-qubit gates in the quantum circuit 41 are performed. The guest graph 42 includes nodes corresponding to the qubits with the qubit numbers "q1, q2, and q3", respectively. Inside each node of the guest graph 42, the qubit number of the corresponding qubit is indicated. In the guest graph 42, the nodes corresponding to a pair of qubits to be operated by each two-qubit gates are connected by a line.

On the other hand, the qubit topology of a QPU included in the quantum computers 210, 220, ... is represented as a host graph 43. The host graph 43 includes nodes corresponding respectively to eight qubit numbers "Q1 to Q8" in the QPU. The node pointed by an arrow from each qubit number corresponds to the qubit with that qubit number. In the host graph 43, nodes corresponding to qubits that connect each other within the QPU are connected by a line.

In order to execute a job that is to execute the quantum circuit 41, it is determined in advance which qubits on the QPU are to be used. In order to execute the quantum circuit 41, qubits that are connected in the host graph 43 need to be allocated to qubits in the quantum circuit 41 corresponding to nodes connected in the guest graph 42.

In the case where the host graph 43 represents the qubit topology of the QPU 212 of the quantum computer 210, it is possible to determine whether the quantum circuit 41 is executable by the quantum computer 210, based on whether the guest graph 42 is able to be mapped to the host graph 43. Mapping the guest graph 42 to the host graph 43 means making an allocation that satisfies a condition that nodes connected to each other in the host graph 43 are allocated to nodes connected to each other in the guest graph 42.

Further, when selecting qubits for executing a job, variations in error among qubits need to be taken into account. Specifically, when a quantum circuit is executed on a QPU, an error may occur in the computation result due to the influence of various types of noise. The frequency and magnitude of error differ for each qubit.

FIG. 5 illustrates an example of error for each qubit. In the example of FIG. 5, the error rate of a measurement operation on each qubit is indicated in the corresponding node in the host graph 43. On the side of each line connecting two nodes, the operation error rate of a two-qubit gate that is applied to the qubits corresponding to these two nodes is indicated.

As illustrated in FIG. 5, the error rate varies for each qubit. In executing a quantum circuit, it is preferable to select and use a region (i.e., a set of qubits used for quantum computation) having small error rates, in order to obtain a more accurate result. That is, when the quantum computers 210, 220, ... are caused to execute quantum circuits, suitable qubits need to be allocated, taking into account the error rates.

As described above, in order to execute a job that specifies a quantum circuit to execute, suitable qubits need to be selected, taking various conditions into account. To this end, various preliminary processes are performed before the execution of the job. These preliminary processes are referred to as preprocessing. Examples of processes performed in the preprocessing include the following.

(a) Process of Converting Quantum Gates in Quantum Circuit into Quantum Gates (Native Gates) Supported by QPU

The types of executable quantum gates depend on the type of a QPU. Therefore, in the case where a quantum circuit includes a quantum gate that is not executable on the QPU, the preprocessing includes a process of converting the quantum gate into an equivalent circuit formed by a combination of quantum gates executable on the QPU.

(b) Process of Converting Structure of Quantum Circuit to Satisfy NN Constraint

In the case where a quantum circuit includes a quantum gate that does not satisfy the NN constraint, the preprocessing includes a process of converting the quantum circuit such that the quantum gate operations satisfy the NN constraint. For example, a swap gate may be inserted to move the states of two qubits to which a two-qubit gate is applied, to adjacent qubits on the quantum circuit.

(c) Optimization Process

Various improvements may be achieved by converting a single quantum gate or a combination of quantum gates in a quantum circuit into another single quantum gate or another combination of quantum gates. For example, there is an optimization process of selecting qubits to be used or changing the configuration of quantum gates in the quantum circuit, based on the specific error rates of qubits, so as to reduce the impacts of errors. Such an optimization process for reducing the error rate is referred to noise-adaptive optimization.

(d) Process of Conversion into Instruction Sequence for Operating Qubits

The preprocessing includes a process of converting a quantum gate sequence in a quantum circuit into an instruction sequence for operating qubits. For example, in the case of a superconducting quantum computer, quantum gates are converted into a sequence of microwave pulse irradiation instructions (a pulse instruction sequence) for operating the qubits.

Note that the conversion of quantum gates in the above processes (a) to (c) may be either an equivalent conversion or an approximate conversion.

As described above, various processes are performed as the preprocessing, in order to perform the quantum computation of a submitted job. If quantum multiprogramming is performed without taking the preprocessing into account, the efficiency of job execution may be degraded. The following describes difficulty in performing appropriate quantum multiprogramming.

FIG. 6 illustrates an example of job scheduling without taking preprocessing into account. For example, the terminal devices 401, 402, ... generate quantum circuits corresponding to problems to be solved, using a quantum program. The terminal devices 401, 402, ⋯ then transmit execution requests for jobs 51, 52, ⋯ for executing the generated quantum circuits to the classical computer 100.

In the classical computer 100, a job scheduler 100a operates. The classical computer 100 enqueues the jobs 51, 52, ... into an execution queue 100b of the job scheduler 100a. The job scheduler 100a generates an execution schedule for the jobs enqueued into the execution queue 100b, and transmits job execution requests to the quantum computers 210, 220, ... according to the generated execution schedule.

Each of the quantum computers 210, 220, ... is able to execute a plurality of jobs in parallel within the range of qubits provided in its QPU. Therefore, in the case where there are unused qubits in a QPU that is executing a job, the job scheduler 100a causes another job to be executed using the unused qubits (quantum multiprogramming). Such quantum multiprogramming improves the utilization rate of the QPU.

FIG. 7 illustrates an example of the quantum multiprogramming. Assume, for example, a QPU 53 having 25 qubits. The qubits 53a within the QPU 53 are represented by circles, and each pair of qubits 53a connected to each other are connected by a line.

In the case where job scheduling is performed without the quantum multiprogramming, for example, a job 54a corresponding to a single quantum circuit is executed singly within the QPU 53. The job 54a uses four qubits. In this case, the QPU utilization is 16%.

When parallel execution of jobs is performed using the quantum multiprogramming, jobs 54b to 54d corresponding to a plurality of quantum circuits are executed in parallel within the QPU 53, for example. The job 54b uses four qubits. The job 54c uses six qubits. The job 54d uses four qubits. In this case, the QPU utilization is 56%.

As described above, in the quantum multiprogramming, qubits in the QPU 53 are allocated to jobs corresponding to a plurality of quantum circuits such that the qubits to be used do not overlap among the jobs, and the jobs are then executed. As a result, the throughput of the job execution is improved.

In such quantum multiprogramming, the degree of parallelism and the accuracy are in a trade-off relationship. The degree of parallelism refers to the number of jobs executed simultaneously in parallel. The accuracy refers to a low error rate.

For example, as illustrated in FIG. 5, the qubits in a QPU have different error rates. If a job is executed singly, qubits having the lowest error rates may be selected and used for the execution of the job. On the other hand, In the case where a plurality of jobs are executed in parallel, not all jobs are able to use a region having the lowest error rates in the QPU. When a certain job J1 uses a region having the lowest error rates, another job J2 is not able to use that region (needs to use a region having higher error rates) . As a result, the accuracy of the output result of the job J2 is lower than that obtained in the case where the job J2 is executed singly.

In addition, the quantum multiprogramming causes crosstalk between jobs, which decreases the computation accuracy for the jobs. Crosstalk refers to a phenomenon in which an operation on one qubit affects the state of another qubit. The crosstalk introduces errors in computation results.

As the degree of parallelism is increased by the quantum multiprogramming, crosstalk occurs between jobs, and the accuracy of the output results of the jobs decreases. Therefore, if the degree of parallelism is increased excessively, the accuracy may decrease to the extent that the computation results become unreliable.

As described above, in the quantum multiprogramming, it is not sufficient to merely improve the QPU utilization. Instead, jobs to be executed in parallel need to be selected while taking into account the balance between the degree of parallelism and accuracy.

The quantum multiprogramming may be performed either on the user side or on the service provider side.

FIG. 8 illustrates an example of quantum multiprogramming performed on the user side. For example, it is assumed that a user generates five jobs J1 to J5 using his/her own terminal device 401. The terminal device 401 determines a combination of jobs that are executable in parallel and groups these jobs into a single job. In FIG. 8, the number of qubits used for the execution of each job is indicated in a rectangle under its job name.

For example, it is assumed that the number of qubits of the QPU 212 in the quantum computer 210 is "8". In this case, in the case where the user intends to cause the quantum computer 210 to perform quantum computation, the user determines combinations of jobs so that the total number of qubits for each combination is 8 or less, using the terminal device 401. In the example of FIG. 8, the jobs are grouped into three jobs K1 to K3. The job K1 includes two jobs J1 and J3. The job K2 includes one job J2. The job K3 includes two jobs J4 and J5.

The terminal device 401 transmits the three jobs K1 to K3 to the classical computer 100. The classical computer 100 then enqueues the jobs K1 to K3 into its execution queue 100b. Then, for each of the jobs K1 to K3, the classical computer 100 instructs the quantum computer 210 to execute the combination of jobs included in that job in parallel.

In the case where parallelization is performed on the user side as described above, jobs to be executed in parallel need to wait for the completion of preprocessing on all the jobs. For this reason, the quantum computing system 300 is not able to exhibit sufficient efficiency as a whole. More specifically, jobs need to be preprocessed before execution. In the case where jobs are parallelized on the user side, the terminal device 401 determines a combination of jobs to be executed in parallel, performs a part of the preprocessing (for example, the above-described processes (a) to (c)), and then transmits the jobs to the classical computer 100.

In the case where the terminal device 401 performs the preprocessing, the terminal device 401 transmits the jobs after the preprocessing of all the jobs to be executed in parallel is completed. Note here that the preprocessing time differs for each job. Therefore, jobs with short preprocessing time need to wait for execution until the preprocessing of the other jobs with long preprocessing time is completed. This may cause a delay in the time to complete the jobs or a decrease in accuracy.

For example, it is assumed that the job J1 and the job J3 are grouped together and executed in parallel as a single job. If the preprocessing time of the job J3 is long, a situation may occur in which the preprocessing and execution of the job J1 could be completed before the preprocessing of the job J3 is completed. In this case, the parallel execution of the grouped jobs provides no benefit.

That is, it is more efficient to execute the job J1 singly and then execute the job J3 singly. In this case, the job J3 is executed immediately after entering the execution queue, without any waiting time. Note that the purpose of parallel execution is to shorten the queue waiting time. However, if no waiting time occurs, there is no point in performing parallel execution. If the parallel execution is uselessly performed, the accuracy decreases due to differences in the error rate among qubits and the influence of crosstalk. Therefore, from the viewpoint of accuracy, it is preferable to perform single execution.

For example, it is assumed that the preprocessing time is "5 seconds" for the job J1 and "2 minutes" for the job J3. The execution time is "0.5 seconds" for the job J1 and "2 seconds" for the job J3.

Compared with single execution, in the case of parallel execution, the job J1 needs to wait until the preprocessing of the job J3 is completed. The waiting time in this case is "1 minute and 55 seconds". During this waiting time, the preprocessing and execution of the job J1 could have been completed.

Next, an example of implementing quantum multiprogramming on the service provider side of the quantum computing system 300 will be described.

FIG. 9 illustrates an example of quantum multiprogramming implemented on the service provider side. Jobs J1 to J4 transmitted from the plurality of terminal devices 401, 402, ... to the classical computer 100 are enqueued into the execution queue 100b. The classical computer 100 determines an execution schedule 100c for the jobs in the execution queue 100b so as to increase throughput.

The schedule 100c indicates the execution time of each job and the qubit numbers of qubits allocated for the execution. In the schedule 100c, the row labels correspond to qubit numbers, and the column labels correspond to time slice numbers. At the intersection of a given qubit number and a given time slice number in the schedule 100c, a job to be executed during the time zone indicated by the time slice number using the qubit with the qubit number is indicated.

As the quantum multiprogramming, for example, the classical computer 100 first predicts the execution time of each of the jobs J1 to J4. Next, based on information including the execution times and the numbers of qubits to be used, the classical computer 100 determines an optimal execution order that minimizes the time slice numbers, using a bin packing algorithm. Then, the classical computer 100 instructs the quantum computer 210 to execute the jobs according to the determined schedule 100c.

Such a method of collectively scheduling jobs accumulated in the execution queue 100b is not suitable for a situation in which jobs having short execution times intermittently arrive. That is, new jobs continuously arrive in an intermittent manner at the quantum computing system 300. Each quantum computer 210, 220, ... needs to complete computation within a time (coherence time) in which qubits maintain their quantum states, but the coherence time is very short. Therefore, generally, the execution time of each quantum computation job is very short.

In the job scheduling illustrated in FIG. 9, an optimal execution order varies every time a new job arrives. In order to increase the degree of parallelism, it is important to accumulate a certain number of jobs before determining the execution order. However, some jobs may be executable before jobs are accumulated.

In addition, if the number of jobs or the number of qubits in a QPU increases, it takes a long time to determine an optimal execution order. Therefore, some job may be executable even while the schedule is generated.

In the example of FIG. 9, it is assumed that jobs arrive at the quantum cloud service in the order of job J1 → job J2 → job J3 → job J4. An optimal execution order, like the schedule 100c of FIG. 9, may be obtained only after all the jobs J1 to J4 have arrived. That is, in order to generate the optimal schedule 100c, the job J1 needs to be in an execution waiting state until the job J4 arrives. If the time difference between the arrival of the job J1 and the arrival of the job J4 is longer than or equal to the execution time of the job J1, the job J1 could be executable within the waiting time for the job J4 to arrive.

The waiting times for subsequent jobs are also affected by preprocessing. That is, an earlier-submitted job is scheduled only after the preprocessing of other subsequent jobs is completed. If the preprocessing of the subsequent jobs takes time, the earlier-submitted job will have a longer waiting time accordingly.

For example, in order to obtain an optimal execution order for the jobs J1 to J4, the preprocessing of the jobs J1 to J4 needs to be completed first; otherwise, the jobs are not executable according to the obtained execution order. In the example of FIG. 9, it is possible to start executing the job J1 before the preprocessing of the job J2 is completed. However, the preprocessing of the job J2 may be uncompleted when the execution start time (T3) of the job J2 comes. If the schedule 100c is generated before the preprocessing of the job J2 is completed, the job J2 is not executable in accordance with the determined schedule 100c.

To deal with this, the classical computer 100 selects jobs for which the preprocessing is complete one by one, and causes the quantum computers 210, 220, ... to execute the jobs without waiting for the completion of the preprocessing of other subsequent jobs. As a result, there is no waiting time for determining an optimal execution order. In addition, the classical computer 100 determines the next job and qubits to be used for the next job, taking into account execution constraints, parallelism, the accuracy of an output result, and others. This improves the degree of parallelism while preventing a decrease in accuracy. In addition, the classical computer 100 further improves the degree of parallelism by avoiding the conflict with respect to qubits in the preprocessing.

For example, as a job scheduling method suitable for quantum multiprogramming, the classical computer 100 repeatedly selects and executes the next job. In doing so, the classical computer 100 performs job scheduling in which jobs waiting for preprocessing and jobs waiting for execution are distinguished from each other. For example, the computer 100 sequentially searches a ready queue, starting from the execution-waiting job at the head, to find a suitable combination of an execution-waiting job serving as the next job and utilized qubits for the next job.

In determining the next job and qubits to be used, the classical computer 100 uses at least one of the following five determination criteria. The "first criterion" is a criterion related to execution constraints. The "second criterion" is a criterion related to information on subsequent jobs. The "third criterion" is a criterion related to free regions remaining for subsequent jobs. The "fourth criterion" is a criterion related to the predicted output reliability of an output result. The "fifth criterion" is a criterion related to crosstalk between jobs. A free region refers to a region that includes qubits not used for execution of jobs.

In the case of using the "first criterion" related to execution constraints, the classical computer 100 selects qubits to be used for the execution of the next job in such a manner as to satisfy the NN constraint.

In the case of using the "second criterion" related to information on subsequent jobs, the classical computer 100 selects qubits to be used for the execution of the next job while avoiding, as much as possible, a conflict with respect to qubits to be used for subsequent jobs, in order to improve parallelism. Furthermore, by predicting the preprocessing times and the job execution times of jobs, the classical computer 100 is able to more effectively avoid the conflict with the subsequent jobs with respect to the utilized qubits. For example, by predicting the preprocessing times, the classical computer 100 is able to select qubits to be used for the execution of the next job so that the qubits do not conflict with qubits used by other jobs whose preprocessing completion times are close to that of the next job. In doing so, the classical computer 100 is also able to select qubits to be used for the execution of the next job, taking into account the accuracy of the output results of the job.

In the case of using the "third criterion" related to free regions remaining for subsequent jobs, the classical computer 100 selects qubits to be used for the execution of the next job so that a larger contiguous free region remains on the QPU, in order to improve parallelism.

In the case of using the "fourth criterion" related to the predicted output reliability of an output result, the classical computer 100 calculates the predicted output reliability of a job for each qubit region in order to ensure the accuracy of the output result of the job. Then, the classical computer 100 selects qubits to be used for the execution of the next job so that the reliability satisfies a criterion.

In the case of using the "fifth criterion" related to crosstalk between jobs, the classical computer 100 selects qubits to be used for the execution of the next job so that the influence of crosstalk between jobs is less than or equal to a criterion, in order to ensure the accuracy of the output result of the job.

The above five criteria are classified into mandatory criteria, which need to be always satisfied by jobs to be executed, and the other optional criteria. The "first criterion" is classified as a mandatory criterion. The "third criterion" is a qubit selection criterion that is imposed in the case where there exist a plurality of combination patterns for qubit allocation, and is not a criterion for determining whether a job is executable. Each of the "second criterion", the "fourth criterion", and the "fifth criterion" may be set either as a mandatory criterion or an optional criterion. In the following description, the "fourth criterion" and the "fifth criterion" are taken as mandatory criteria, and the "second criterion" is taken as an optional criterion.

The classical computer 100 is able to further improve scheduling performance by combining job scheduling algorithms designed for classical computers.

For example, the classical computer 100 may perform an aging process that increases the priority of jobs that have been waiting for execution for a certain period of time, thereby preventing job starvation.

In addition, for example, the classical computer 100 may predict the execution times of jobs and arrange the execution-waiting jobs in ascending order of the execution times. By doing so, the turnaround time may be shortened. Such job scheduling is called shortest job priority scheduling.

Furthermore, for example, the classical computer 100 may classify users into groups or subgroups, and adjust the priority of execution-waiting jobs so that the usage time of quantum computers is equally distributed among the groups, in order to improve fairness. Such job scheduling is called fair-share scheduling.

FIG. 10 is a block diagram illustrating an example of a quantum multiprogramming function according to the second embodiment. The classical computer 100 includes a preprocessing completion waiting queue 110, a ready queue 120, a job execution request acquisition unit 130, a preprocessing time prediction unit 140, a preprocessing execution unit 150, an execution time prediction unit 160, an order adjustment unit 170, and an execution job selection unit 180.

The preprocessing completion waiting queue 110 is a queue for registering jobs (conversion-waiting jobs) whose preprocessing has not yet been completed among submitted jobs. The preprocessing completion waiting queue 110 corresponds to an example of the first queue 1 described in the first embodiment.

The ready queue 120 is a queue for registering jobs (execution-waiting jobs) whose preprocessing is complete and which are executable but not yet executed. The ready queue 120 corresponds to an example of the second queue 2 described in the first embodiment.

The job execution request acquisition unit 130 receives job execution requests from the terminal devices 401, 402, .... The job execution request acquisition unit 130 registers the jobs indicated by the execution requests in the preprocessing completion waiting queue 110. When the job execution request acquisition unit 130 receives an execution result of a job from the execution job selection unit 180, the job execution request acquisition unit 130 returns the execution result to the terminal device that has sent the execution request for the job.

The preprocessing time prediction unit 140 predicts the time needed for the preprocessing of each job registered in the preprocessing completion waiting queue 110. The preprocessing time prediction unit 140 notifies the preprocessing execution unit 150 and the execution job selection unit 180 of the prediction results of the preprocessing times.

The preprocessing execution unit 150 preprocesses the jobs registered in the preprocessing completion waiting queue 110. The preprocessing execution unit 150 registers the preprocessed jobs in the ready queue 120.

The execution time prediction unit 160 predicts the time needed to execute each job registered in the ready queue 120. The execution time prediction unit 160 notifies the order adjustment unit 170 and the execution job selection unit 180 of the prediction results of the execution times of the jobs.

The order adjustment unit 170 rearranges the jobs within the ready queue 120 according to the predicted execution times. For example, the order adjustment unit 170 determines the priority of the jobs in the ready queue 120 using a job scheduling algorithm designed for classical computers, and rearranges the jobs in descending order of priority.

The execution job selection unit 180 selects the next job to be executed from the ready queue 120, and transmits an instruction to execute the selected job to any one of the quantum computers 210, 220, .... The execution job selection unit 180 also transmits the execution result of the job to the job execution request acquisition unit 130.

The functions of the elements illustrated in FIG. 10 may be implemented by causing the processor 101 to execute program modules corresponding to the elements, for example.

As illustrated in FIG. 10, the classical computer 100 includes two queues for managing jobs. Queues input to the classical computer 100 are executed by the quantum computers 210, 220, ... via the preprocessing completion waiting queue 110 and the ready queue 120.

FIG. 11 illustrates an example of job queuing. For example, when the job execution request acquisition unit 130 receives an execution request for a job J9 from the terminal device 401, the job execution request acquisition unit 130 enqueues the job J9 into the preprocessing completion waiting queue 110. The jobs registered in the preprocessing completion waiting queue 110 are preprocessed by the preprocessing execution unit 150, for example, sequentially from the head of the preprocessing completion waiting queue 110. The preprocessing execution unit 150 may perform the preprocessing on a plurality of jobs in parallel, within the range permitted by the resources of the processor 101.

The preprocessing execution unit 150 enqueues preprocessed jobs into the ready queue 120. The execution job selection unit 180 searches for the next job to be executed, from among the jobs enqueued into the ready queue 120.

For example, the execution job selection unit 180 searches the ready queue 120, sequentially from the head to the end, to find a suitable job as the next job. For example, it is assumed that only the quantum computer 210 is an available quantum computer. The QPU 212 of the quantum computer 210 has eight qubits. In the QPU 212, a job Ja is being executed using the qubits with qubit numbers "Q1 and Q2". In this case, another job is executable using the remaining six qubits. In FIG. 11, the remaining processing time of the job Ja is indicated by the width of a rectangle indicating the job Ja.

In this example, the job search is conducted sequentially in the order of job J1 → job J2 → ..., until a suitable job is found. When the execution job selection unit 180 finds a suitable job as the next job, the execution job selection unit 180 completes the search and immediately transmits an instruction to execute the found job to the quantum computer 210.

As described above, the job scheduling process suitable for the quantum multiprogramming is roughly divided into three stages: a process performed upon reception of a job execution request, a process performed during preprocessing, and a process performed during job execution.

FIG. 12 is a flowchart illustrating a processing procedure for a process performed upon reception of a job execution request. The process illustrated in FIG. 12 will be described step by step.

[Step S101] The job execution request acquisition unit 130 receives a job execution request from one of the terminal devices 401, 402, .... The job execution request includes a quantum circuit to be executed. The job execution request may specify qubits to be used for executing the job.

[Step S102] The job execution request acquisition unit 130 enqueues the job specified by the received job execution request at the end of the preprocessing completion waiting queue 110.

[Step S103] The preprocessing time prediction unit 140 predicts the time needed to perform preprocessing on the job enqueued in the preprocessing completion waiting queue 110.

The preprocessing time may be predicted using, for example, a trained regression model. For example, the classical computer 100 creates, in advance, a regression model that predicts preprocessing time. Training data used for training the regression model is prepared by, for example, generating a large number of quantum circuits as follows.

(1) Random circuit

For example, quantum circuits in which various quantum gates are randomly combined may be used as training data.

(2) Quantum circuit as component of quantum algorithm

For example, typical quantum circuits (such as a quantum Fourier transform circuit) that are each usable as a component of a quantum algorithm may be used as training data as they are. In addition, a quantum circuit obtained by modifying a part of such a typical quantum circuit serving as a component of the quantum algorithm may be used as training data. The modification may include, for example, replacing a quantum gate with a different type of quantum gate. A quantum circuit generated by combining a typical quantum circuit serving as a component of the quantum algorithm and an arbitrary number of partially modified quantum circuits may be used as training data.

(3) Typical ansatz circuit used in variational quantum algorithm

In a variational quantum algorithm, an ansatz circuit is used as a quantum circuit. This ansatz circuit may be used as training data.

For the preprocessing time prediction, for example, the following features may be used: the number of qubits operated in a quantum circuit to be executed, the number of gates included in the quantum circuit, an optimization level, and other compilation options.

The execution time of a job may also be predicted using a trained regression model. In the regression model for the job execution time prediction, the following features may be used: the duration of pulse irradiation applied to qubits, the data amount of a pulse instruction sequence transferred to the control device 210 that controls the qubits, and others. These values may be calculated by compiling the quantum circuit into a pulse instruction sequence.

As described above, a received job is temporarily enqueued into the preprocessing completion waiting queue 110. The job enqueued into the preprocessing completion waiting queue 110 becomes a target of preprocessing.

FIG. 13 is a flowchart illustrating an example procedure for the preprocessing. Hereinafter, the process illustrated in FIG. 13 will be described step by step.

[Step S201] The preprocessing execution unit 150 sequentially extracts a job from the head of the preprocessing completion waiting queue 110.

[Step S202] The preprocessing execution unit 150 performs preprocessing. For some jobs, allocation of qubits to be used is also performed during the preprocessing. For example, for a job for which the noise-adaptive optimization is requested, the preprocessing execution unit 150 fixes qubits to be used during the preprocessing. In the case where qubits to be used are fixed during the preprocessing, the preprocessing execution unit 150 performs the preprocessing while avoiding a conflict with respect to qubits to be used among jobs having substantially the same preprocessing completion times.

[Step S203] The preprocessing execution unit 150 enqueues the preprocessed job in the ready queue 120.

[Step S204] The execution time prediction unit 160 predicts the time needed to execute the job enqueued into the ready queue 120.

[Step S205] The order adjustment unit 170 adjusts the priority and execution order of the jobs in the ready queue 120 using a job scheduling algorithm directed for classical computers.

As described above, the preprocessing is performed, and jobs for which the preprocessing is complete are enqueued into the ready queue 120. In the case where there is a job for which qubits to be used are fixed during the preprocessing, a conflict with other jobs with respect to the utilized qubits is avoided.

FIG. 14 illustrates an example of avoiding a conflict with respect to utilized qubits during preprocessing. In the example of FIG. 14, it is assumed that the noise-adaptive optimization is requested for jobs J7 and J8. For the jobs J7 and J8 for which the noise-adaptive optimization is requested, the preprocessing execution unit 150 fixes qubits to be used, during the preprocessing. For example, the preprocessing execution unit 150 ensures that qubits to be used do not overlap among jobs having substantially the same preprocessing completion times (among jobs that are candidates to be executed in parallel simultaneously). This improves the degree of parallelism.

For example, the job J7 and the job J8 each have a predicted time of 5 minutes to preprocessing completion. For a job for which the preprocessing has not yet started, the predicted time to preprocessing completion is obtained by adding the waiting time until the execution start of the preprocessing for that job to the time needed for the preprocessing. The waiting time until the execution start of the preprocessing is calculated based on, for example, the preprocessing times of preceding jobs registered before the job in the preprocessing completion waiting queue 110. For example, in the case where the preprocessing is not performed on jobs in parallel, the total time needed for the preprocessing of the preceding jobs before the job in question is taken as the waiting time until the execution start of the preprocessing for the job in question.

Since it is predicted that the job J7 and the job J8 are enqueued into the ready queue 120 at substantially the same time, a conflict with respect to the qubits to be used is avoided. For example, the preprocessing execution unit 150 allocates the qubits with the qubit numbers "Q1, Q2, and Q3" to the job J7 as qubits to be used. In addition, the preprocessing execution unit 150 allocates the qubits with the qubit numbers "Q7 and Q8" to the job J8 as qubits to be used. This prevents interference between the jobs J7 and J8 executed in parallel. Without such conflict avoidance, for example, qubits (for example, qubit numbers "Q1 and Q2") in a region having the lowest error rate are allocated to both the job J7 and the job J8. Such allocation would decrease the degree of parallelism.

In avoiding the conflict with respect to utilized qubits during the preprocessing, the preprocessing execution unit 150 also takes into account the accuracy of the output results of jobs. For example, the preprocessing execution unit 150 may allocate qubits while taking into account the predicted output reliability of an output result or the crosstalk between jobs, so that a decrease in the accuracy of the output result due to parallel execution is suppressed within an allowable range. Details of the qubit allocation taking into account the predicted output reliability of an output result or the crosstalk between jobs will be described later.

Preprocessed jobs are enqueued into the ready queue 120. The priority and execution order of the jobs in the ready queue 120 are adjusted using a job scheduling algorithm directed for classical computers. Examples of the job scheduling algorithm directed for classical computers include the following.

For example, the order adjustment unit 170 may use an algorithm called Aging. In the case where Aging is applied, the order adjustment unit 170 raises the execution priority of a job in the ready queue 120 if the job has been waiting for execution for a predetermined time. In the case where there is a job having a high priority, the execution job selection unit 180 preferentially selects and executes the high-priority job as the next job even if the degree of parallelism is lowered. This prevents the job from entering a starvation state (a state in which the job remains indefinitely unexecuted).

The order adjustment unit 170 may alternatively use an algorithm called shortest job priority scheduling. In the case where the shortest job priority scheduling is applied, the order adjustment unit 170 arranges, based on the predicted execution times of jobs, the execution-waiting jobs in the ready queue 120 in ascending order of execution time. This shortens the turnaround time.

Yet alternatively, the order adjustment unit 170 may use an algorithm called fair share scheduling. In the case where the fair share scheduling is applied, the order adjustment unit 170 classifies users into groups or subgroups. Then, the order adjustment unit 170 adjusts the priority of the execution-waiting jobs in the ready queue 120 so that the usage time of the quantum computers is equally distributed among the groups. This improves fairness among the users.

By combining the above scheduling algorithms directed for classical computers, the scheduling performance may be further improved.

The execution job selection unit 180 searches the ready queue 120, sequentially from the head to the end, to find a suitable job as the next job to be executed. If the jobs registered in the ready queue 120 are as illustrated in FIG. 14, it is determined whether a job is suitable as the next job to be executed, in the order of J1 → J2 → ....

When the execution job selection unit 180 finds a suitable job as the next job, the execution job selection unit 180 completes the search and immediately outputs an instruction to execute the found job to one of the quantum computers 210, 220, .... If the execution job selection unit 180 fails to find a suitable job as the next job, the execution job selection unit 180 performs the search process again from the head of the ready queue 120.

As time elapses while the search is repeated, the number of jobs being executed by the QPU decreases. Therefore, by repeating the search, a suitable job is eventually found as the next job.

For example, even if the QPU has an insufficient free region for executing the job J1 in the first search, the free region in the QPU may increase by the time of the second search, thereby enabling the execution of the job J1.

FIG. 15 is a flowchart illustrating an example procedure for an execution job selection process. Hereinafter, the process illustrated in FIG. 15 will be described step by step.

[Step S301] The execution job selection unit 180 repeatedly executes steps S302 to S311 while the quantum computing system is in operation.

[Step S302] The execution job selection unit 180 clears a variable $J_{cand}$.

[Step S303] The execution job selection unit 180 sequentially selects an execution-waiting job from the head of the ready queue 120, as a job $J_i$ under examination, and executes steps S304 to S308 for the selected job $J_i$ under examination.

[Step S304] The execution job selection unit 180 determines whether the job $J_i$ under examination satisfies all mandatory criteria. The mandatory criteria are, for example, the "first criterion" related to execution constraints, the "fourth criterion" related to the predicted output reliability of an output result, and the "fifth criterion" related to crosstalk between jobs. In this case, the execution job selection unit 180 determines that all the mandatory criteria are satisfied when qubits satisfying the NN constraint are allocable to the job $J_i$ under examination, the predicted output reliability of an output result satisfies a predetermined criterion, and the accuracy due to crosstalk satisfies a criterion.

In the case where all the mandatory criteria are satisfied, the execution job selection unit 180 advances the process to step S305. If at least one of the mandatory criteria is not satisfied, the execution job selection unit 180 advances the process to step S309.

[Step S305] The execution job selection unit 180 determines whether the job $J_i$ under examination satisfies all optional criteria. The optional criteria include, for example, the "second criterion" related to information on subsequent jobs. In this case, the execution job selection unit 180 determines that the optional criteria are satisfied if the qubits to be used for executing the job $J_i$ under examination do not have any conflict with the qubits to be used for its subsequent jobs.

If all the optional criteria are satisfied, the execution job selection unit 180 advances the process to step S306. If at least one optional criterion is not satisfied, the execution job selection unit 180 advances the process to step S307.

[Step S306] The execution job selection unit 180 instructs one of the quantum computers 210, 220, ... to execute the job $J_i$ under examination, and removes the job from the ready queue 120. At this time, the execution job selection unit 180 selects the qubits to be allocated to the job to be executed so as to satisfy the "third criterion" related to free regions remaining for subsequent jobs. That is, the execution job selection unit 180 selects the qubits to be used for executing the job such that a larger contiguous free region remains on the QPU. Thereafter, the execution job selection unit 180 exits the loop of steps S304 to S308, and advances the process to step S312.

[Step S307] The execution job selection unit 180 determines whether the variable $J_{cand}$ is empty. If it is empty, the execution job selection unit 180 advances the process to step S308. If it is not empty, the execution job selection unit 180 advances the process to step S309.

[Step S308] The execution job selection unit 180 sets the job $J_i$ under examination in the variable $J_{cand}$.

[Step S309] When the examination of the jobs of the ready queue 120 up to the last job is completed, the execution job selection unit 180 advances the process to step S310. If the job $J_i$ under examination has not reached the end of the ready queue 120, the execution job selection unit 180 sets the next selected job as the job $J_i$ under examination and executes steps S304 to S308.

[Step S310] The execution job selection unit 180 determines whether a job has been set in the variable $J_{cand}$. If a job has been set, the execution job selection unit 180 advances the process to step S311. If no job has been set, the execution job selection unit 180 advances the process to step S312.

[Step S311] The execution job selection unit 180 instructs one of the quantum computers 210, 220, ... to execute the job set in the variable $J_{cand}$, and removes the job from the ready queue 120. At this time, the execution job selection unit 180 selects qubits to be allocated to the job to be executed in such a manner as to satisfy the "third criterion".

[Step S312] If the system is in operation, the execution job selection unit 180 continues to repeat the loop of steps S302 to S311.

In the manner described above, among the execution-waiting jobs enqueued into the ready queue 120, one job that is most suitable under the current situation is selected and executed. At this time, it is determined whether the selected job satisfies each criterion.

FIG. 16 illustrates an example of determination regarding the "first criterion". For example, it is assumed that a job to be executed by the QPU 212 having 8 qubits is selected. Among the qubits with the qubit numbers "Q1 to Q8" included in the QPU 212, two qubits with the qubit numbers "Q1 and Q2" are currently used for the quantum computation of the job Ja.

The execution job selection unit 180 sequentially selects a job under examination from the head of the ready queue 120. In the example of FIG. 16, the job J1 is selected first. The execution job selection unit 180 determines, as a mandatory criterion, whether the job J1 satisfies the NN constraint.

The number of qubits to be operated in a quantum circuit to be executed for the job J1 is "3", and the three qubits with qubit numbers "q6 to q8" need to satisfy the connectivity as represented in a guest graph 44. Among the qubits with the qubit numbers "Q1 to Q8" of the QPU 212 represented in the host graph 43, the qubits with the qubit numbers "Q3 to Q8" are idle. In this case, the structure of the guest graph 44 is able to be mapped to a free region of the host graph 43 (that is, the job is immediately executable). That is, the job J1 satisfies the "first criterion" related to execution constraints.

FIG. 17 illustrates an example of determination regarding the "second criterion". When determining utilized qubits for the next job, the execution job selection unit 180 suppresses a reduction in parallelism by avoiding, as much as possible, a conflict with subsequent jobs with respect to utilized qubits. Here, "a subsequent job refers to a job that may be executed after the next job. The execution job selection unit 180 determines that a job under examination is suitable as the next job if the job is executable using qubits other than the qubits scheduled to be used for subsequent jobs.

In the example of FIG. 17, the use of the qubit with the qubit number "Q5" is fixed for the job J4. Further, the use of the qubits with the qubit numbers "Q1, Q2, and Q3" is fixed for the job J7. In this case, when the job J1 is selected as a job under examination, it is determined whether there exist qubits available for the execution of the job J1 among the qubits other than those with the qubit numbers "Q1, Q2, Q3, and Q5". In the example of FIG. 17, since the job J1 is executable using the qubits with the qubit numbers "Q6, Q7, and Q8", the job J1 is determined to be suitable as the next job. Similarly, for example, the job J2 is also determined to be suitable as the next job if the job J2 is executable using the qubits with the qubit numbers "Q6 and Q7".

By avoiding an overlap of utilized qubits with the subsequent jobs in this way, the degree of parallelism is improved. In other words, if the qubits to be used for the subsequent jobs are used, the degree of parallelism decreases. For example, if the job J1 uses the qubit with the qubit number "Q5", the job J4 is not executable until the execution of the job J1 is completed. As a result, the degree of parallelism decreases. On the other hand, avoiding the overlap of utilized qubits with the subsequent jobs leads to avoiding the use of the qubit with the qubit number "Q5" for the job J1, which enables the job J4 to start execution before the execution of the job J1 is completed.

Note that, in avoiding the conflict with subsequent jobs with respect to utilized qubits, it is also possible to limit a range of jobs to be taken as the subsequent jobs.

FIG. 18 illustrates an example in which the range of subsequent jobs is limited in making a determination regarding the "second criterion". In the example of FIG. 18, the range of jobs to be taken as subsequent jobs is limited only to those expected to be executed very soon. For example, the execution job selection unit 180 takes only the first M jobs (M is a natural number) from the head as the subsequent jobs. This prevents selection of unsuitable jobs that would otherwise occur if utilized qubits to be used for jobs that are not expected to be executed soon were taken into account.

For example, in the case of M = 3, the execution job selection unit 180 determines whether the next job is executable without using the qubits scheduled to be used for the jobs J1 to J3. In the case of M = 7, the execution job selection unit 180 determines whether the next job is executable without using the qubits scheduled to be used for the jobs J1 to J7.

With respect to the "second criterion", in the case where a conflict with any subsequent job with respect to utilized qubits is unavoidable, the conflict may be permitted.

FIG. 19 illustrates an example in which a conflict with a subsequent job with respect to utilized qubits is permitted. For example, the execution job selection unit 180 allows a job to be determined as the next job, even if utilized qubits overlap between the job and a subsequent job, only when there is no candidate for a job that is executable next without using the utilized qubits scheduled for the subsequent job.

For example, assume that M = 4. The job J4 is scheduled to use the qubits with the qubit numbers "Q1 to Q8". Then, none of the jobs J1, J2, and J3 is executable without using the qubits with the qubit numbers "Q1 to Q8" scheduled to be used for the job J4. In such a case, the execution job selection unit 180 determines whether a job is suitable as the next job while permitting the overlap of utilized qubits with the job J4. For example, by determining the qubits with the qubit numbers "Q5, Q7, and Q8" as utilized qubits for the job J1, the execution job selection unit 180 determines that the job J1 satisfies the "second criterion" as to whether a job is suitable as the next job.

The execution job selection unit 180 may also more appropriately set the range of jobs to be taken as subsequent jobs, by predicting the execution times and the preprocessing times of jobs.

FIG. 20 illustrates an example in which a range of jobs to be taken as subsequent jobs is set based on preprocessing time. For example, as conditions for jobs to be taken as subsequent jobs, the execution job selection unit 180 imposes not only a condition where the M jobs from the head are taken but also a condition that jobs that become executable (that are enqueued into the ready queue 120) within the predicted execution time of the job under examination. This makes it possible to more accurately detect the possibility of a conflict with respect to utilized qubits.

For example, assume the case of determining whether the job J1 is suitable as the next job. Assume here that M = 7. The predicted execution time of the job J1 is "1 second". In this case, the execution job selection unit 180 takes, as subsequent jobs, the jobs J1 to J5 that are expected to be in the ready queue 120 within "1 second" and the jobs J1 to J7 that are within the M positions from the head.

That is, in the case where the job J1 is immediately executed, the job J1 occupies the QPU for "1 second". Therefore, the jobs J6 to J8, which need longer than "1 second" before becoming executable, do not conflict with the job J1 with respect to utilized qubits. Therefore, the jobs J1 to J5 are taken as the subsequent jobs.

Among the subsequent jobs J1 to J5, only the job J4 has its utilized qubits already fixed. The job J4 uses the qubit with the qubit number "Q5". Therefore, the execution job selection unit 180 determines whether the job J1 is executable without using the qubit with the qubit number "Q5".

FIG. 21 illustrates an example of determination regarding the "third criterion". When there exist a plurality of candidate regions of qubits available for a job, the execution job selection unit 180 determines a region of utilized qubits such that a larger contiguous free region remains. That is, by leaving a larger contiguous region remaining, the likelihood that subsequent jobs are executable in parallel increases. For this reason, the execution job selection unit 180 determines qubits to be used for executing the job under examination so as to leave a larger contiguous region remaining.

For example, it is assumed that the job J2 is selected as a job under examination. A guest graph 45 for the job J2 indicates the use of two qubits connected to each other. In this case, regions A, B, and C in the host graph 43 are candidate regions for executing the job J2.

In the case where the job J2 uses the region A or the region C, one free region including four qubits remains. On the other hand, in the case where the job J2 uses the region B, two free regions each including two qubits remain. Therefore, the execution job selection unit 180 determines that the job J2 satisfies the "third criterion" when the qubits in the region A or the region C are used to execute the job J2, since this leaves a larger contiguous free region remaining.

For example, it is assumed that a subsequent job Jx of the job J2 needs three contiguous qubits for its execution, as illustrated in a guest graph 46. In this case, if the region B is selected as a region of qubits to be used for executing the job J2, the job J2 and the job Jx are not executable in parallel. On the other hand, if the region A or the region C is selected as a region of qubits to be used for executing the job J2, there is a possibility that the job J2 and the job Jx are executable in parallel. That is, the degree of parallelism is improved.

FIG. 22 illustrates an example of determination regarding the "fourth criterion". The "fourth criterion" is a criterion intended to suppress a decrease in the accuracy of an output result caused by parallel execution within a certain range.

There is a trade-off relationship between the degree of parallelism and accuracy. That is, the parallel execution of jobs decreases the accuracy of the output results of some jobs. Therefore, the execution job selection unit 180 calculates the predicted output reliability (a value reflecting the accuracy of the output result) for the job under examination. If the predicted output reliability for the job under examination satisfies a certain criterion, the execution job selection unit 180 determines that the job under examination is suitable as the next job.

For example, the execution job selection unit 180 compares the predicted output reliability obtained in the case of using a region with the smallest error rate (in the case where parallel execution is not performed) with the predicted output reliability obtained in the case where parallel execution is performed. If the reduction in the reliability is less than or equal to a predetermined threshold, the execution job selection unit 180 determines that the job under examination satisfies the "fourth criterion" as to whether a job under examination is suitable as the next job.

Alternatively, the execution job selection unit 180 may use a simpler criterion instead of the above criterion. For example, the execution job selection unit 180 determines that the job under examination is suitable as the next job, if the predicted output reliability is greater than or equal to a predetermined threshold.

The predicted output reliability may be calculated based on the number of gates in a quantum circuit and the error rates of utilized qubits. For example, the execution job selection unit 180 calculates the predicted output reliability using the following equation:

$$\text{Predicted output reliability} = r_{2q}^{\#2q_gates} \times r_{1q}^{\#1q_gates} \times r_{ro}^{\#qubits}$$

$r_{1q}$ denotes the average reliability of single-qubit gate operations in a qubit region used by the job. $r_{2q}$ denotes the average reliability of two-qubit gate operations in the qubit region used by the job. $r_{ro}$ denotes the average reliability of measurement operations in the qubit region used by the job. The average reliability of each type of operations is calculated as "(100 - error rate of each operation)/100".

#2q_gates denotes the number of two-qubit gates in the quantum circuit to be executed. #1q_gates denotes the number of single-qubit gates in the quantum circuit to be executed. #qubits denotes the number of qubits in the quantum circuit to be executed. The equation for calculating a value equivalent to the predicted output reliability is not limited to the above equation, and another equation may be used.

For example, it is assumed that the job under examination is the job J1, and that the number of qubits in a quantum circuit to be executed for the job J1 is "#qubits = 3". It is also assumed that the number of single-qubit gates included in the quantum circuit to be executed for the job J1 is "#1q_gates = 10". It is also assumed that the number of two-qubit gates included in the quantum circuit to be executed for the job J1 is "#2q_gates = 4".

In addition, it is assumed that the error rate of a single-qubit gate operation on each of the qubits with the qubit numbers "Q1 to Q8" is "0". The error rate of the measurement operation on the qubit with the qubit number "Q1" is "0.2". The error rate of the measurement operation on the qubit with the qubit number "Q2" is "0.5". The error rate of the measurement operation on the qubit with the qubit number "Q3" is "0.7". The error rate of the measurement operation on the qubit with the qubit number "Q4" is "1.2". The error rate of the measurement operation on the qubit with the qubit number "Q5" is "2.1". The error rate of the measurement operation on the qubit with the qubit number "Q6" is "1.9". The error rate of the measurement operation on the qubit with the qubit number "Q7" is "1.4". The error rate of the measurement operation on the qubit with the qubit number "Q8" is "1.5".

The error rate of the two-qubit gate operation on the qubits with the qubit numbers "Q1 and Q2" is "0.7". The error rate of the two-qubit gate operation on the qubits with the qubit numbers "Q1 and Q3" is "1.2". The error rate of the two-qubit gate operation on the qubits with the qubit numbers "Q2 and Q4" is "0.9". The error rate of the two-qubit gate operation on the qubits with the qubit numbers "Q3 and Q4" is "0.7". The error rate of the two-qubit gate operation on the qubits with the qubit numbers "Q3 and Q5" is "5.2". The error rate of the two-qubit gate operation on the qubits with the qubit numbers "Q4 and Q6" is "3.0". The error rate of the two-qubit gate operation on the qubits with the qubit numbers "Q5 and Q6" is "2.5". The error rate of the two-qubit gate operation on the qubits with the qubit numbers "Q5 and Q7" is "0.9". The error rate of the two-qubit gate operation on the qubits with the qubit numbers "Q6 and Q8" is "1.1". The error rate of the two-qubit gate operation on the qubits with the qubit numbers "Q7 and Q8" is "1.2".

For example, the predicted output reliability in the case where the qubits with the qubit numbers "Q1, Q2, and Q3" are used for executing the job J1 is calculated as follows.

The average reliability of the single-qubit gate operations is calculated as "$r_{1q} = 1$". The average reliability of the two-qubit gate operations is calculated as "$r_{2q} = \{(100 - 0.7)/100 + (100 - 1.2)/100\}/2 = 0.991$". The average reliability of the measurement operations is calculated as "$r_{ro} = \{(100 - 0.2)/100 + (100 - 0.5)/100 + (100 - 0.7)/100\}/3 = 0.995$". The predicted output reliability is calculated as "$1^{10} \times 0.991^4 \times 0.995^3 = 0.950$".

Similarly, the predicted output reliabilities are calculated for the other qubit regions. For example, the predicted output reliabilities are "0.912" in the case where Q5, Q7, and Q8 are used, "0.912" in the case where Q6, Q7, and Q8 are used, and "0.894" in the case where Q3, Q4, and Q6 are used.

In the example of FIG. 22, the predicted output reliability in the case where the qubits with the qubit numbers "Q1, Q2, Q3" are used is the highest, and the value thereof is "0.950". This value corresponds to the case without parallel execution.

In the case where parallel execution is not performed, the qubits with the qubit numbers "Q1, Q2, and Q3" are usable. However, the qubits with the qubit numbers "Q1 and Q2" are currently used for the job Ja. Therefore, the region including the qubits with the qubit numbers "Q1, Q2, Q3" is not available for the execution of the job J1.

In the case where the qubits with the qubit numbers "Q5, Q7, and Q8" are used and in the case where the qubits with the qubit numbers "Q6, Q7, and Q8" are used, the predicted output reliability is "0.912" in both cases. A reduction in the predicted output reliability, relative to the case without parallel execution, is calculated as "0.950 - 0.912 = 0.038".

In the case where the qubits with the qubit numbers "Q3, Q4, and Q6" are used, the predicted output reliability is "0.894". A reduction in the predicted output reliability, relative to the case without parallel execution, is calculated as "0.950 - 0.894 = 0.056".

Assume, for example, that a threshold for the reduction in the predicted output reliability is set to "0.04". In this case, the execution job selection unit 180 determines that the job under examination is suitable as the next job, if its reduction in the predicted output reliability is "0.04" or less. In the example of FIG. 22, the execution job selection unit 180 determines that the job J1 satisfies the "fourth criterion" in the case where a combination of the qubits with the qubit numbers "Q5, Q7, and Q8" or a combination of the qubits with the qubit numbers "Q6, Q7, and Q8" is used. On the other hand, the execution job selection unit 180 determines that the job J1 is not suitable as the next job in the case where a combination of the qubits with the qubit numbers "Q3, Q4, Q6" is used.

FIG. 23 illustrates an example of determination regarding the "fifth criterion". When a plurality of circuits are executed in parallel, the accuracy decreases due to crosstalk. In general, the influence of crosstalk is likely to increase if the positions where the quantum circuits is executed are close to each other.

For example, when the qubits in a region where the job Ja is being executed are operated, the operation may unintentionally affect qubits in a region A. Typically, the region A adjacent to the job Ja is more susceptible to crosstalk than a region C located away from the job Ja.

Therefore, in the case where a job is executable using qubits in a region where the influence of crosstalk is considered to be small, the execution job selection unit 180 determines that the job is suitable as the next job to be executed. For example, the execution job selection unit 180 determines that the influence of the crosstalk is small in the case where the job is executable using the qubits in a region that is separated by N or more qubits from the region of the qubits currently used for the currently executing job.

In the example of FIG. 23, it is assumed that the influence of crosstalk is small in the case where the distance between regions is two qubits or more. The job J1 is executable using, for example, the qubits with the qubit numbers "Q5, Q7, and Q8", and these qubits are separated by at least two qubits from the qubits with the qubit numbers "Q1 and Q2" used for executing the job Ja. Therefore, the execution job selection unit 180 determines that the job J1 satisfies the "fifth criterion" as to whether a job is suitable as the next job to be executed.

Note that the execution job selection unit 180 may determine whether the fifth criterion is satisfied, based on another criterion, instead of the above "N qubits or more apart" criterion.

For example, the execution job selection unit 180 may measure the strength of crosstalk for each qubit pair in advance. The crosstalk strength may be represented by, for example, the magnitude of error (error rate) induced in another qubit when a certain qubit is operated. The execution job selection unit 180 obtains the average value of the crosstalk strength across all qubit pairs, each pair including one qubit used for the currently executing job and one qubit to be used for the job under examination. For example, if the average value of the crosstalk strength is less than or equal to a threshold, the execution job selection unit 180 determines that the influence of crosstalk is small.

In the example of FIG. 23, it is assumed that the measurement results of the crosstalk strength between the qubits with the qubit numbers "Q1 and Q2" used for the execution of the job Ja and other qubits are as follows.

The crosstalk strength between the qubits with the qubit numbers "Q1 and Q3" is "0.20". The crosstalk strength between the qubits with the qubit numbers "Q1 and Q4" is "0.18". The crosstalk strength between the qubits with the qubit numbers "Q2 and Q4" is "0.25". The crosstalk strength between the qubits with the qubit numbers "Q2 and Q3" is "0.21". The crosstalk strength between the qubits with the qubit numbers "Q1 and Q5" is "0.01". The crosstalk strength between the qubits with the qubit numbers "Q2 and Q6" is "0.01". It is assumed that crosstalk does not occur in the other qubit pairs (error rate "0").

For example, if the average error rate due to crosstalk is less than or equal to "0.05", the execution job selection unit 180 determines that the influence of crosstalk is small. In this case, in the region including the qubits with the qubit numbers "Q5 to Q8", the average error rate due to crosstalk is less than or equal to "0.05". Therefore, in the case where the qubits in the region including the qubits with the qubit numbers "Q5 to Q8" are used, the execution job selection unit 180 determines that the job J1 satisfies the "fifth criterion" as to whether a job is suitable as the next job to be executed.

As described above, in the second embodiment, an executable job is sequentially selected one by one as a job under examination, and if the job under examination is suitable as the next job to be executed, the job under examination is immediately executed. Thus, the job under examination does not need to wait for the completion of preprocessing of other jobs. Further, since a job is checked one by one as a job under examination to determine whether the job under examination is suitable as the next job to be executed, the computational cost is reduced compared to, for example, the case where a packing algorithm is executed for a plurality of jobs. Therefore, the determination as to whether each job is suitable as the next job to be executed may be performed in a short time, and no waiting time is generated for determining an optimal execution order.

In addition, since it is determined whether a job is suitable as the next job to be executed, taking into account various criteria including execution constraints, it is possible to improve the degree of parallelism while preventing a decrease in accuracy. Further, a conflict with subsequent jobs with respect to utilized qubits is also avoided. Therefore, a reduction in the degree of parallelism due to the presence of a job for which qubits to be used are predetermined is prevented.

The foregoing merely illustrates the principles of the present disclosure. Various modifications and alterations may be made by those skilled in the art, and the present disclosure is not limited to the exact configurations and applications described above, and all possible modifications and equivalents are deemed to be within the scope of the present invention as defined by the appended claims and their equivalents.

Reference Signs List

1 First queue
2 Second queue
3a to 3d Job
4a to 4d Conversion-waiting job
5a to 5d Execution-waiting job
6 Quantum computer
7 QPU
7a to 7h Qubit
8a, 8b, ... Terminal device
10 Information processing apparatus
11 Storage unit
12 processing unit

## Claims

**1.** A job scheduling program that causes a computer to perform a process comprising:

enqueuing a job indicating execution of quantum computation into a first queue;
converting, for the job included in the first queue, a procedure of the quantum computation to be performed by the job into an instruction sequence executable by a quantum computer;
enqueuing the job, for which the converting is complete, into a second queue;
determining, based on a predetermined criterion, for a job that is sequentially selected from a head of the second queue, which qubit, serving as a utilized qubit, to use for executing the selected job and whether to execute the selected job immediately; and
instructing, upon determining that the selected job is to be executed immediately, the quantum computer to perform quantum computation using the utilized qubit, based on an instruction sequence corresponding to the selected job.

**2.** The job scheduling program according to claim 1, wherein the determining of the utilized qubit and whether to execute the selected job immediately includes determining whether a first criterion is satisfied, the first criterion being that there exists a combination of idle qubits that satisfies a constraint related to connectivity of qubits for executing the selected job included in the second queue and is not used for executing another job currently being executed.

**3.** The job scheduling program according to claim 2, wherein the determining of the utilized qubit and whether to execute the selected job immediately includes determining, for the selected job included in the second queue, the selected job serving as a job under examination, whether a second criterion is satisfied, the second criterion being that the first criterion is satisfied without using a qubit scheduled to be used for a subsequent job whose immediate execution is to be determined later than that of the job under examination.

**4.** The job scheduling program according to claim 3, wherein the determining of the utilized qubit and whether to execute the selected job immediately includes, in an arrangement where one or more jobs included in the first queue follow one or more jobs included in the second queue, taking, as the subsequent job, another job included in the second queue different from the job under examination or a job included in the first queue, each being within M positions (M being a natural number) from a head of the arrangement.

**5.** The job scheduling program according to claim 3, wherein the determining of the utilized qubit and whether to execute the selected job immediately includes taking, as the subsequent job, a job, among one or more jobs included in the first queue, for which the converting of a procedure of quantum computation to be performed into an instruction sequence is to be completed within an execution time needed to execute the job under examination included in the second queue, measured from a current time, and another job included in the second queue different from the job under examination.

**6.** The job scheduling program according to claim 3, wherein the determining of the utilized qubit and whether to execute the selected job immediately includes permitting a determination that the job included in the second queue, which does not satisfy the second criterion, is to be executed immediately, upon determining that, other than the subsequent job for which the qubit scheduled to be used have been set, the second queue does not include any job that is executable immediately without using the qubit scheduled to be used for the subsequent job.

**7.** The job scheduling program according to claim 2, wherein the determining of the utilized qubit and whether to execute the selected job immediately includes, upon determining that there exist, in plurality, the combination of idle qubits that satisfies the first criterion,

counting, for each of the plurality of combinations, a number of contiguous remaining idle qubits excluding the idle qubits included in said each of the plurality of combinations, and
determining the utilized qubit based on a third criterion related to the number of contiguous remaining idle qubits obtained for said each of the plurality of combinations.

**8.** The job scheduling program according to claim 1, wherein the determining of the utilized qubit and whether to execute the selected job immediately includes

generating a plurality of combinations of qubits available for the selected job included in the second queue, the selected job serving as a job under examination,
calculating, for each of the plurality of combinations, a predicted output reliability indicating a reliability of a computation result of performing the quantum computation using the qubits belonging to said each of the plurality of combinations, based on error rates of operations on a plurality of qubits provided in the quantum computer, and
determining whether to execute the job under examination included in the second queue immediately, based on a fourth criterion related to the predicted output reliability.

**9.** The job scheduling program according to claim 2, wherein the determining of the utilized qubit and whether to execute the selected job immediately includes determining whether a fifth criterion is satisfied, the fifth criterion being that the selected job included in the second queue, the selected job serving as a job under examination, satisfies the first criterion by using, among one or more idle qubits not used for executing said another job currently being executed, a qubit that is separated by at least a predetermined distance from a qubit used for executing said another job currently being executed.

**10.** A job scheduling method comprising:

enqueuing a job indicating execution of quantum computation into a first queue;
converting, for the job included in the first queue, a procedure of the quantum computation to be performed by the job into an instruction sequence executable by a quantum computer;
enqueuing the job, for which the converting is complete, into a second queue;
determining, based on a predetermined criterion, for a job that is sequentially selected from a head of the second queue, which qubit, serving as a utilized qubit, to use for executing the selected job and whether to execute the selected job immediately; and
instructing, upon determining that the selected job is to be executed immediately, the quantum computer to perform quantum computation using the utilized qubit, based on an instruction sequence corresponding to the selected job.

**11.** An information processing apparatus comprising:
a processing unit for:

enqueuing a job indicating execution of quantum computation into a first queue;
converting, for the job included in the first queue, a procedure of the quantum computation to be performed by the job into an instruction sequence executable by a quantum computer;
enqueuing the job, for which the converting is complete, into a second queue;
determining, based on a predetermined criterion, for a job that is sequentially selected from a head of the second queue, which qubit, serving as a utilized qubit, to use for executing the selected job and whether to execute the selected job immediately; and
instructing, upon determining that the selected job is to be executed immediately, the quantum computer to perform quantum computation using the utilized qubit, based on an instruction sequence corresponding to the selected job.

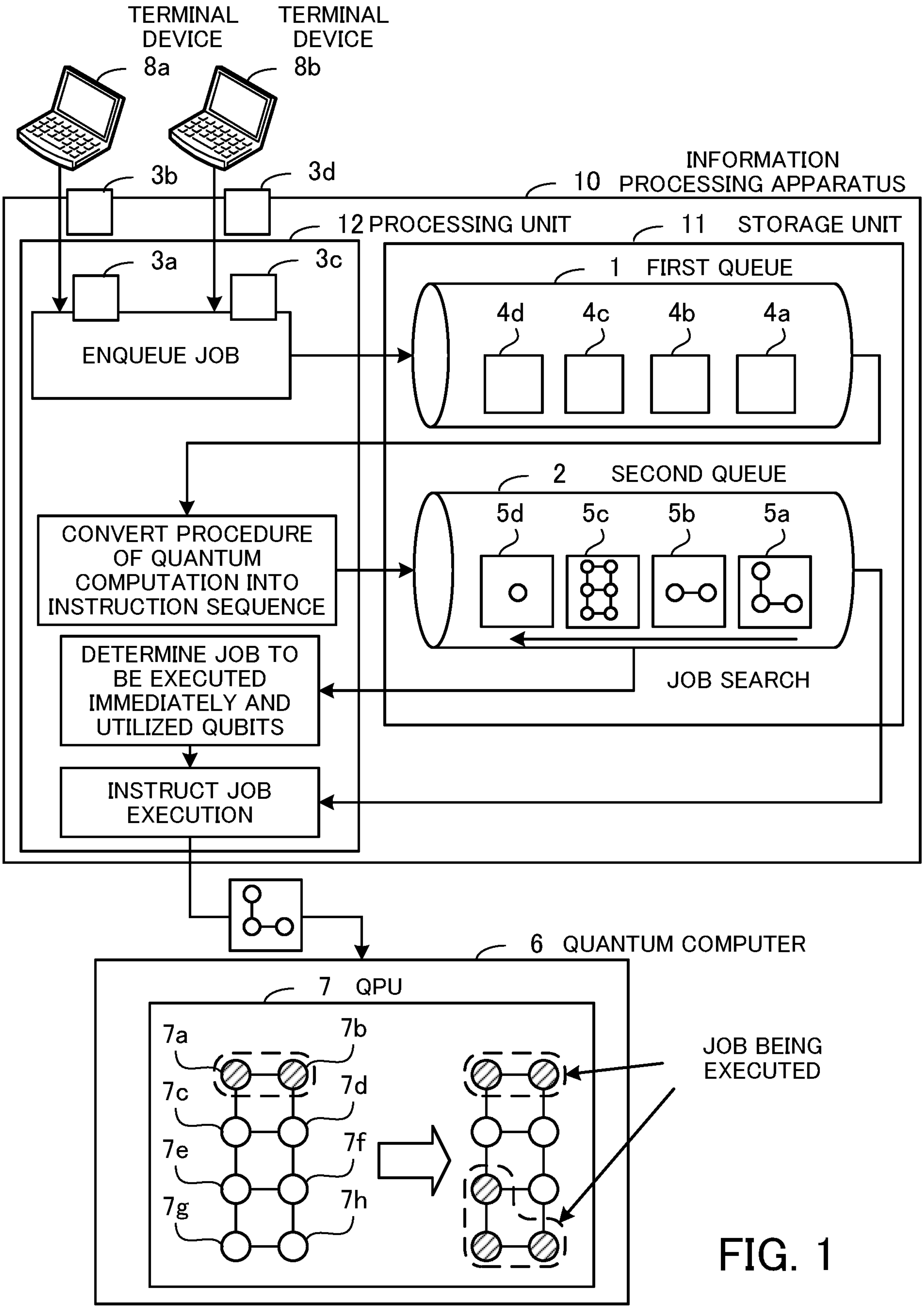
TERMINAL DEVICE 8a
TERMINAL DEVICE 8b
3b
3d
10 INFORMATION PROCESSING APPARATUS
12 PROCESSING UNIT
11 STORAGE UNIT
3a
3c
1 FIRST QUEUE
4d
4c
4b
4a
ENQUEUE JOB
2 SECOND QUEUE
5d
5c
5b
5a
CONVERT PROCEDURE OF QUANTUM COMPUTATION INTO INSTRUCTION SEQUENCE
DETERMINE JOB TO BE EXECUTED IMMEDIATELY AND UTILIZED QUBITS
JOB SEARCH
INSTRUCT JOB EXECUTION
6 QUANTUM COMPUTER
7 QPU
7a
7b
7c
7d
7e
7f
7g
7h
JOB BEING EXECUTED

FIG. 1

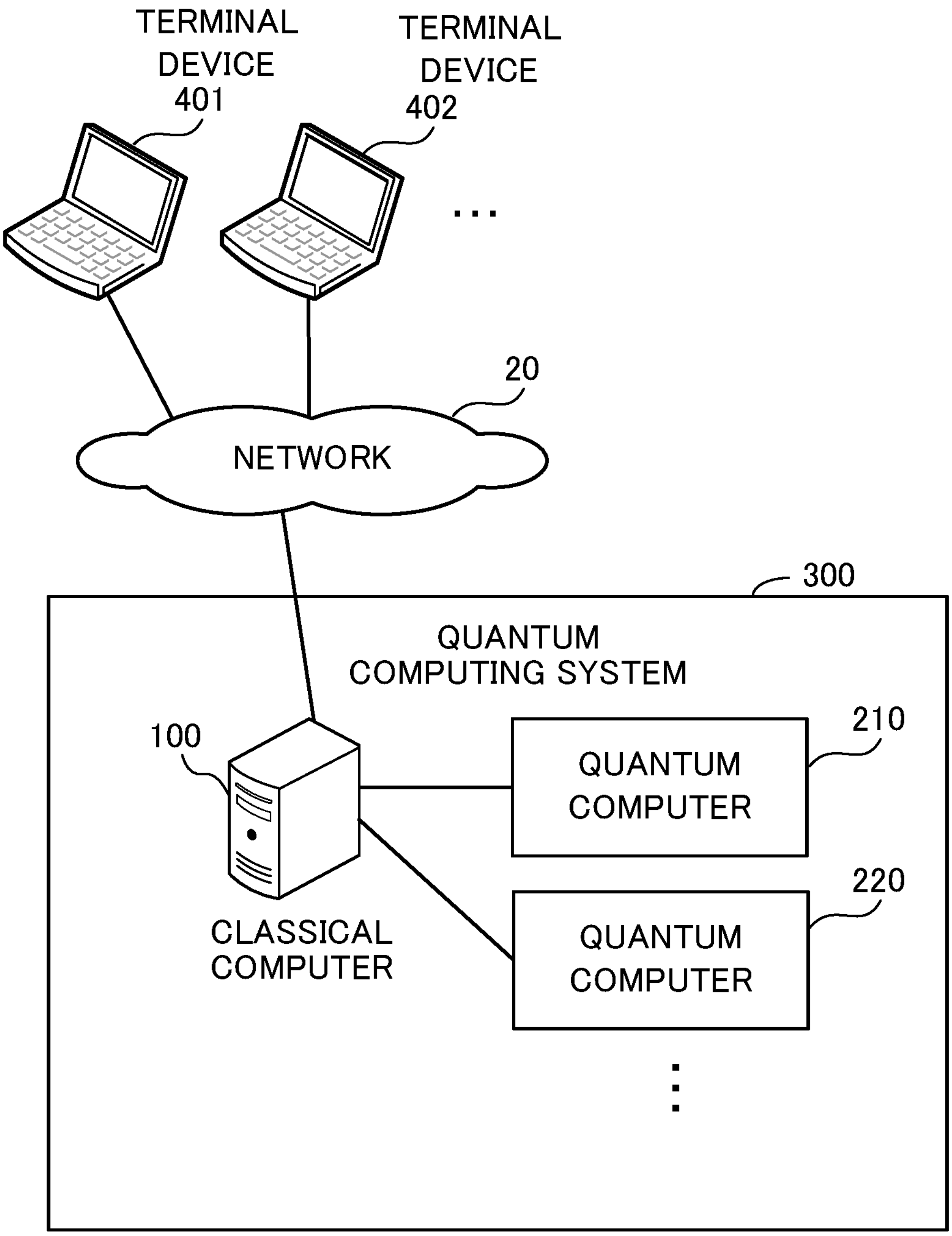
TERMINAL
DEVICE
401
TERMINAL
DEVICE
402
...
20
NETWORK
300
QUANTUM
COMPUTING SYSTEM
100
CLASSICAL
COMPUTER
210
QUANTUM
COMPUTER
220
QUANTUM
COMPUTER
⋮

FIG. 2

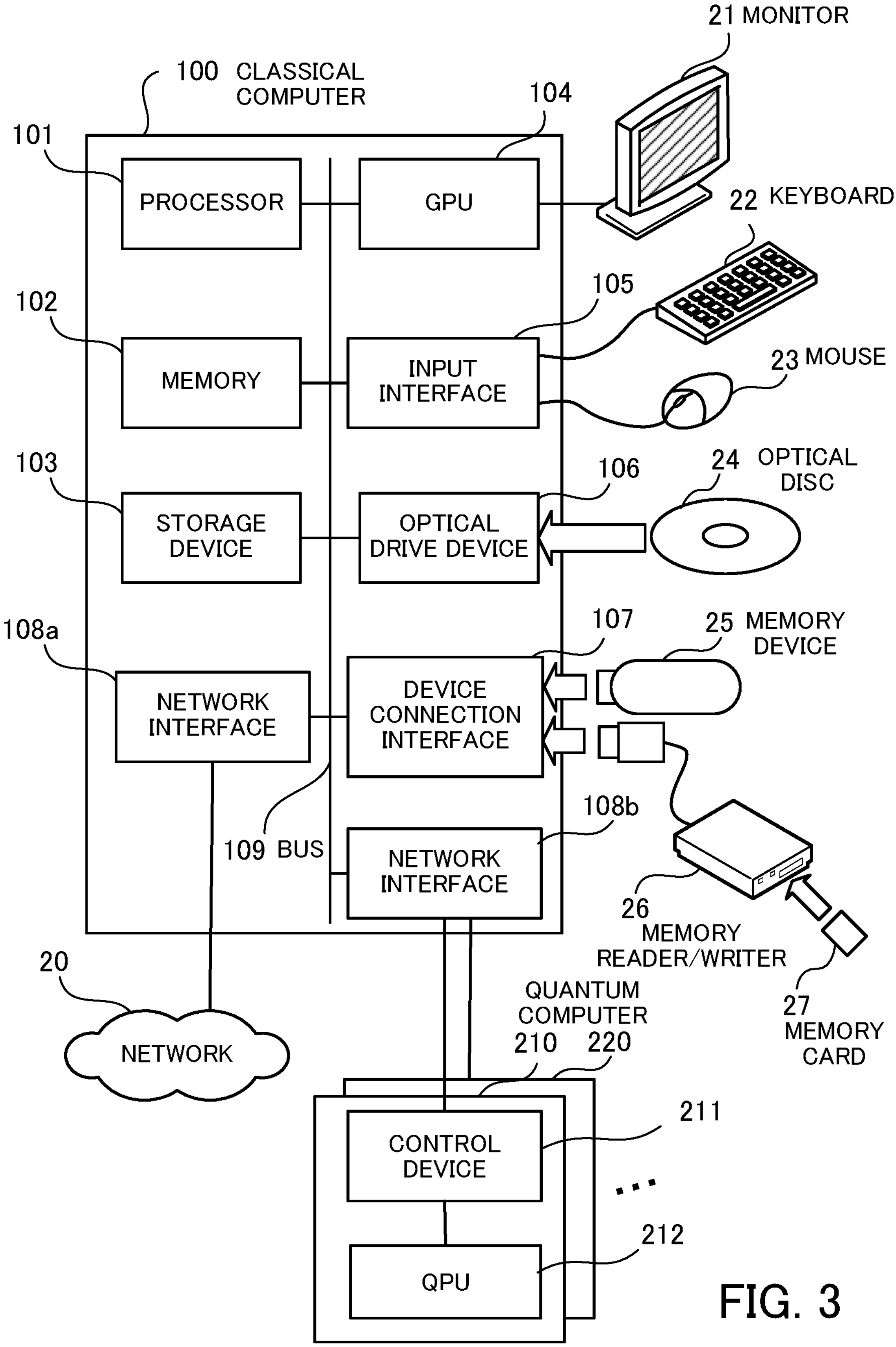
21 MONITOR
100 CLASSICAL COMPUTER
104
101
PROCESSOR
GPU
22 KEYBOARD
105
102
MEMORY
INPUT INTERFACE
23 MOUSE
103
106
24 OPTICAL DISC
STORAGE DEVICE
OPTICAL DRIVE DEVICE
107
25 MEMORY DEVICE
108a
NETWORK INTERFACE
DEVICE CONNECTION INTERFACE
108b
109 BUS
NETWORK INTERFACE
26
MEMORY READER/WRITER
20
QUANTUM COMPUTER
27
MEMORY CARD
210
220
NETWORK
211
CONTROL DEVICE
...
212
QPU

FIG. 3

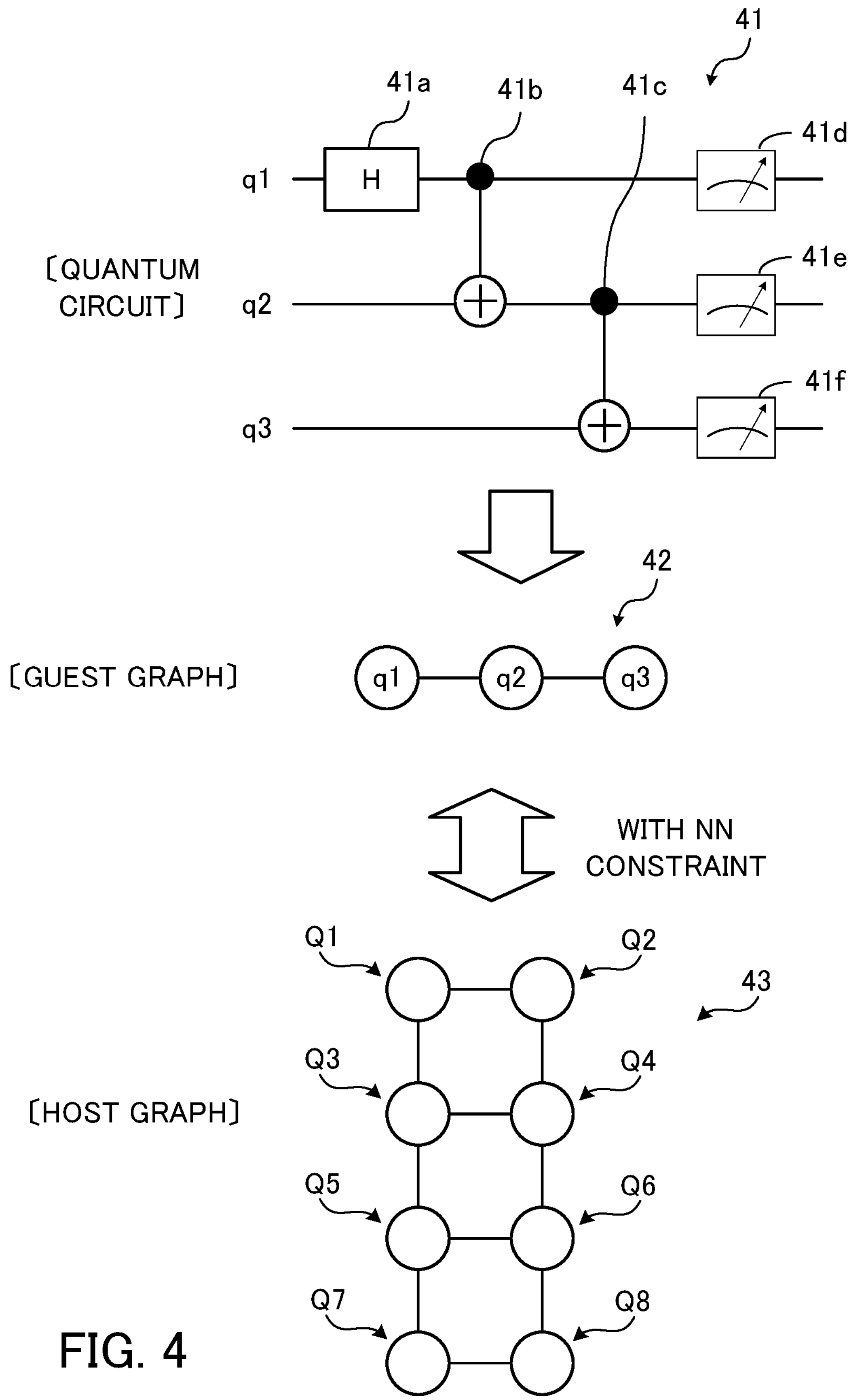
41
41a
41b
41c
41d
41e
41f
〔QUANTUM CIRCUIT〕
q1
q2
q3
H
42
〔GUEST GRAPH〕
q1
q2
q3
WITH NN CONSTRAINT
Q1
Q2
43
Q3
Q4
〔HOST GRAPH〕
Q5
Q6
Q7
Q8

FIG. 4

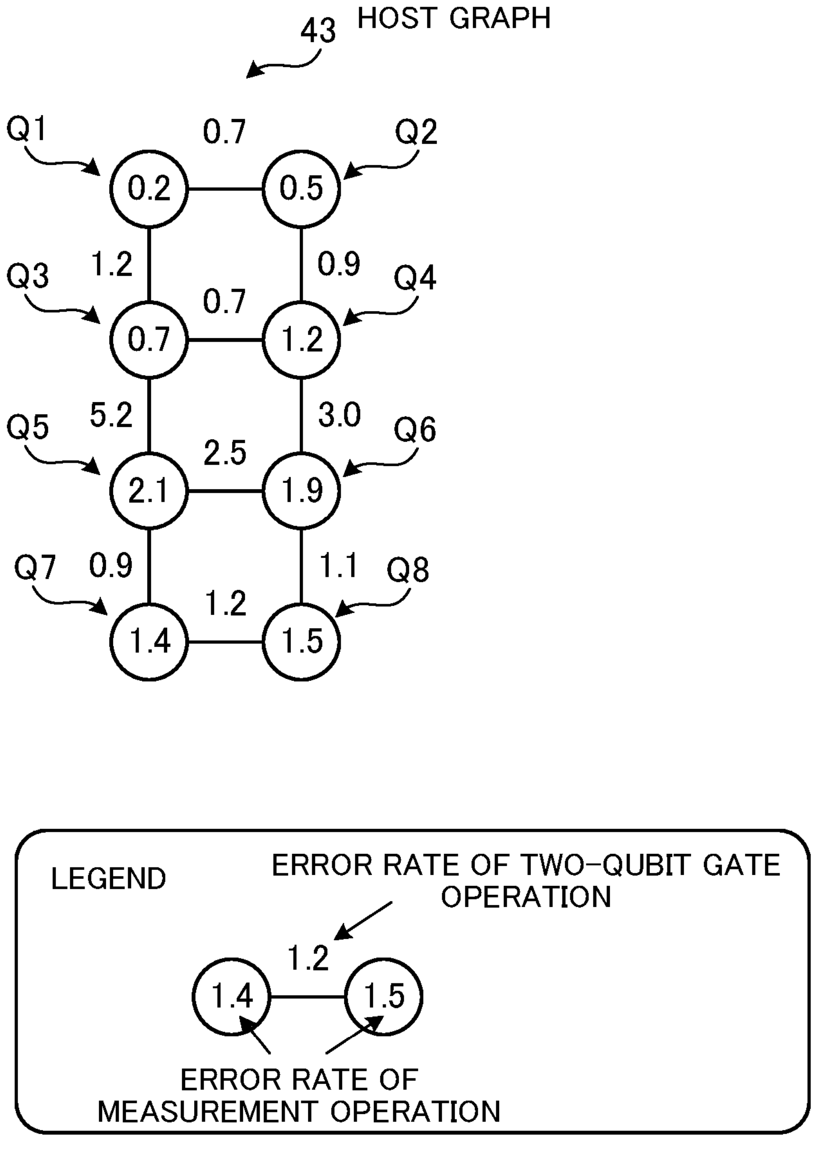
43 HOST GRAPH
Q1
Q2
Q3
Q4
Q5
Q6
Q7
Q8
0.2
0.5
0.7
1.2
2.1
1.9
1.4
1.5
0.7
1.2
0.9
0.7
5.2
3.0
2.5
0.9
1.1
1.2
LEGEND
ERROR RATE OF TWO-QUBIT GATE OPERATION
1.2
1.4
1.5
ERROR RATE OF MEASUREMENT OPERATION

FIG. 5

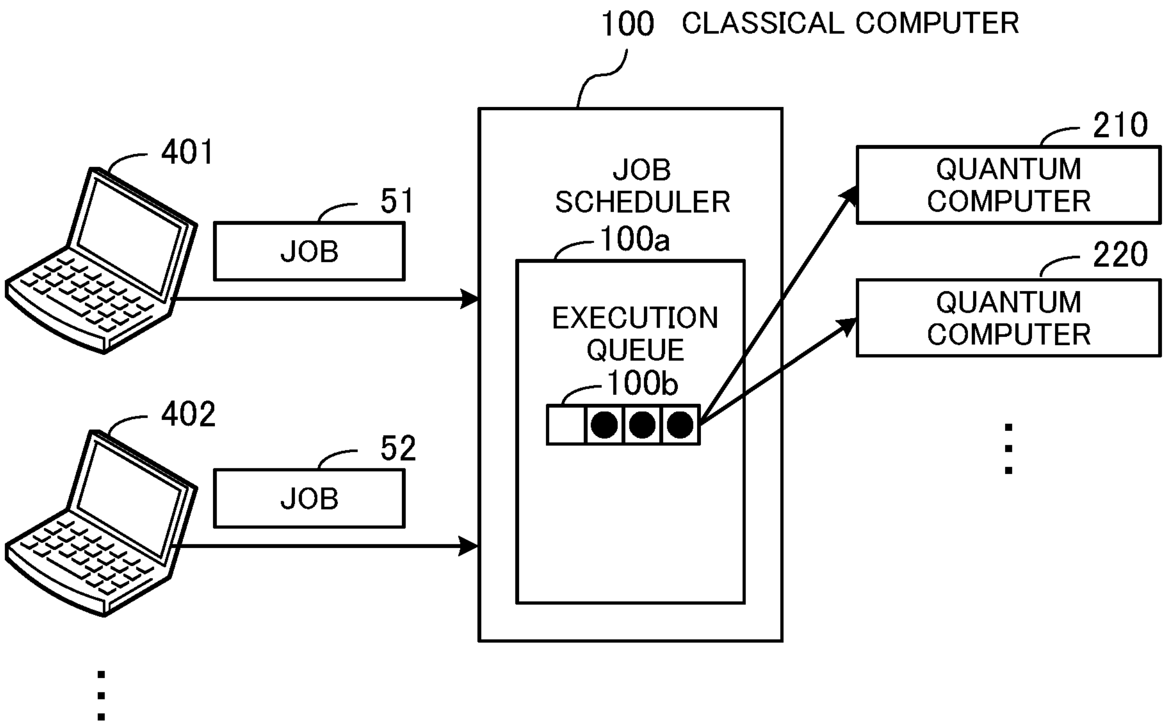
100 CLASSICAL COMPUTER
401
51
JOB
JOB SCHEDULER
100a
EXECUTION QUEUE
100b
210
QUANTUM COMPUTER
220
QUANTUM COMPUTER
402
52
JOB

FIG. 6

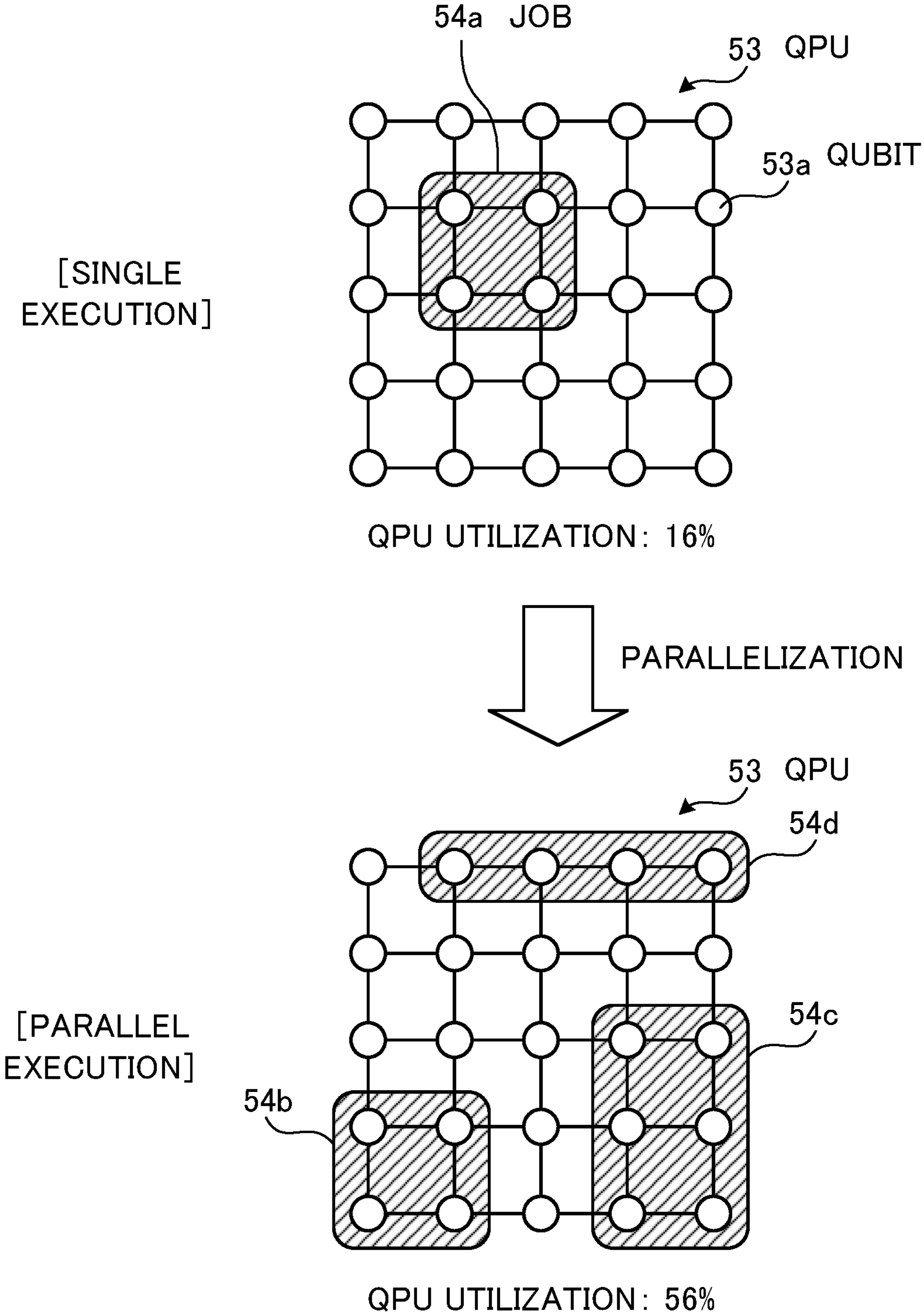
54a JOB
53 QPU
53a QUBIT
[SINGLE EXECUTION]
QPU UTILIZATION: 16%
PARALLELIZATION
53 QPU
54d
54c
[PARALLEL EXECUTION]
54b
QPU UTILIZATION: 56%

FIG. 7

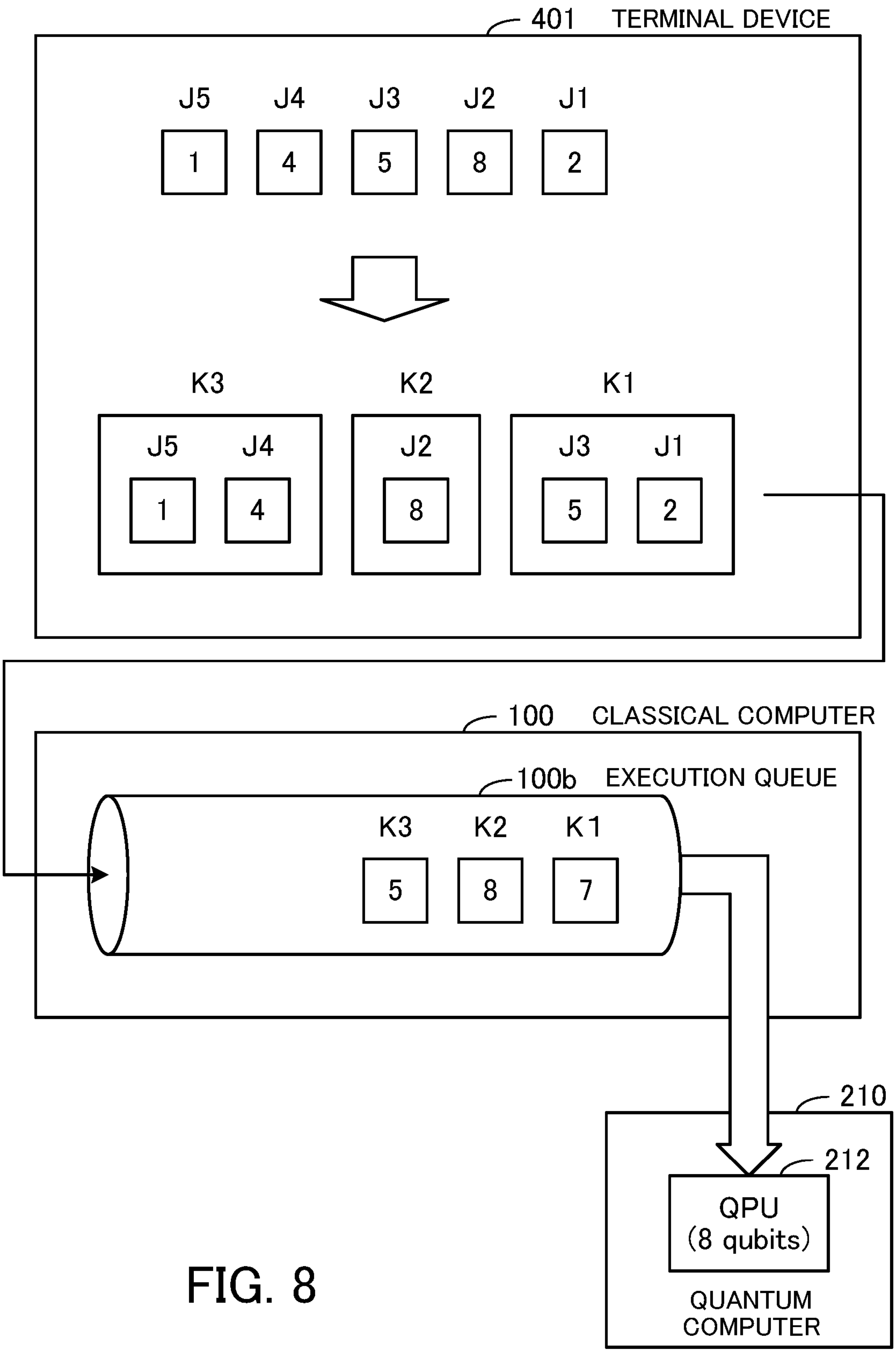
401 TERMINAL DEVICE
J5 J4 J3 J2 J1
1 4 5 8 2
K3 K2 K1
J5 J4 J2 J3 J1
1 4 8 5 2
100 CLASSICAL COMPUTER
100b EXECUTION QUEUE
K3 K2 K1
5 8 7
210
212
QPU
(8 qubits)
QUANTUM
COMPUTER

FIG. 8

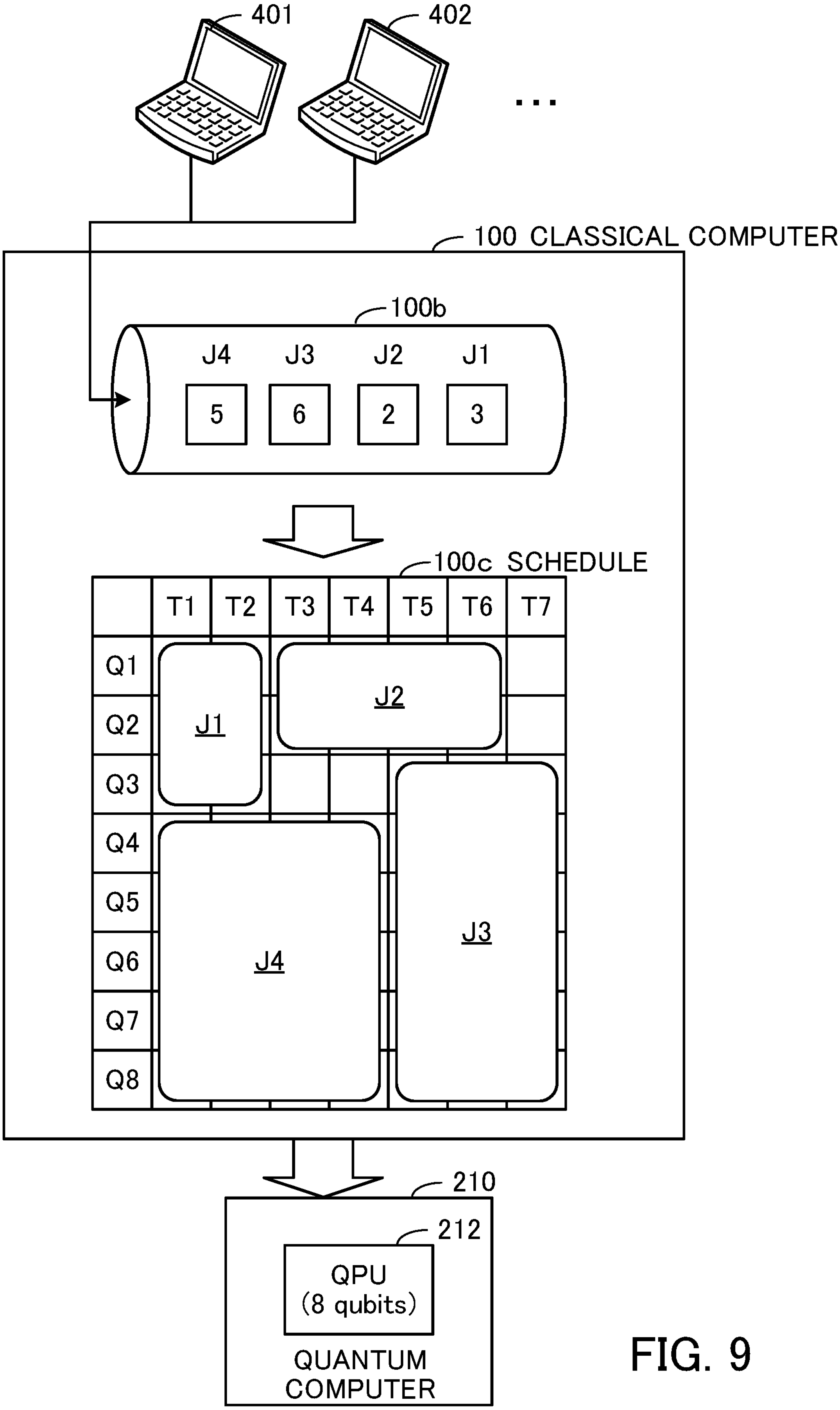
401
402
...
100 CLASSICAL COMPUTER
100b
J4
J3
J2
J1
5
6
2
3
100c SCHEDULE
T1
T2
T3
T4
T5
T6
T7
Q1
Q2
Q3
Q4
Q5
Q6
Q7
Q8
J1
J2
J3
J4
210
212
QPU
(8 qubits)
QUANTUM
COMPUTER

FIG. 9

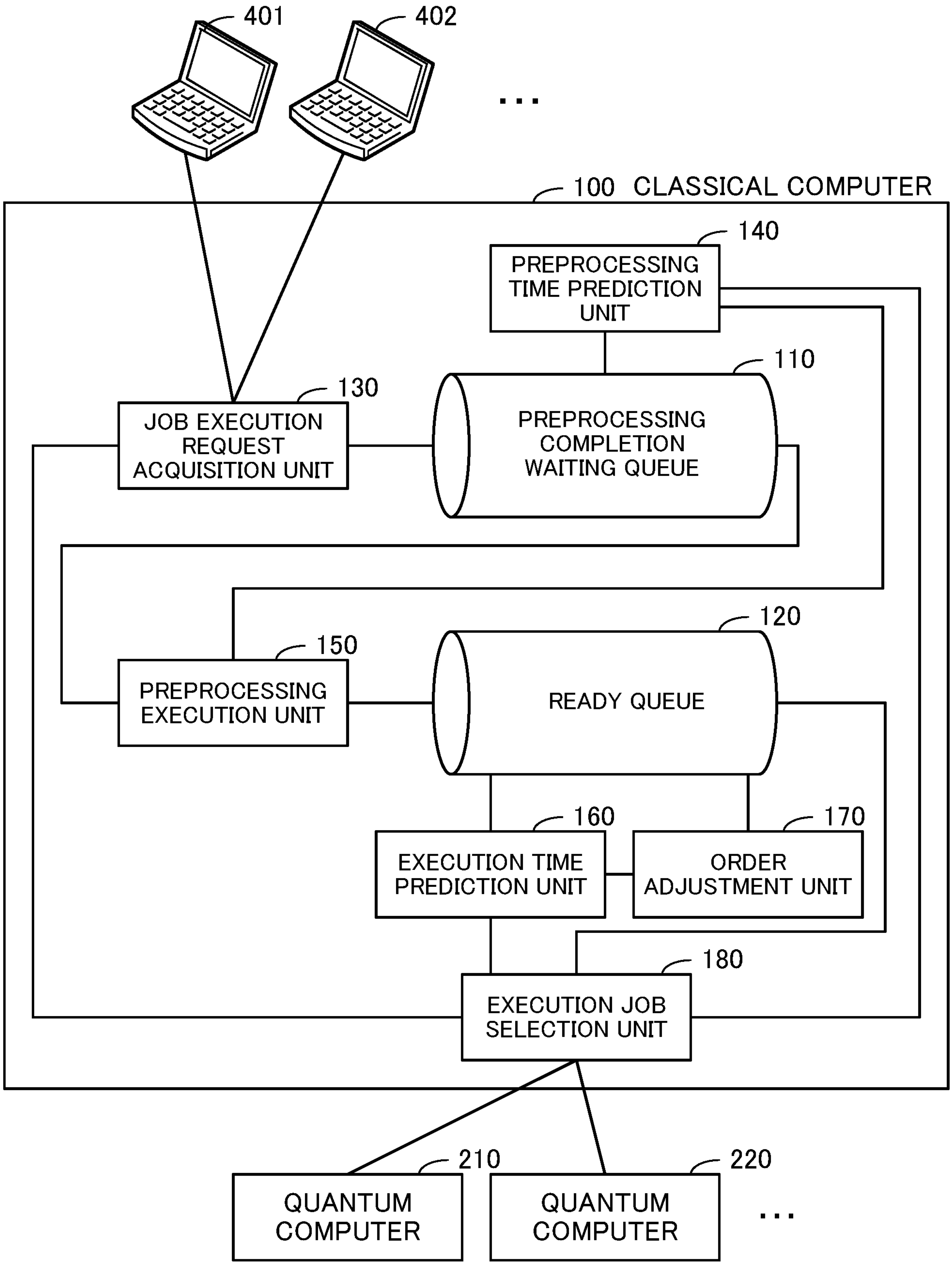
401
402
...
100 CLASSICAL COMPUTER
140
PREPROCESSING TIME PREDICTION UNIT
110
130
JOB EXECUTION REQUEST ACQUISITION UNIT
PREPROCESSING COMPLETION WAITING QUEUE
120
150
PREPROCESSING EXECUTION UNIT
READY QUEUE
160
170
EXECUTION TIME PREDICTION UNIT
ORDER ADJUSTMENT UNIT
180
EXECUTION JOB SELECTION UNIT
210
220
QUANTUM COMPUTER
QUANTUM COMPUTER
...

FIG. 10

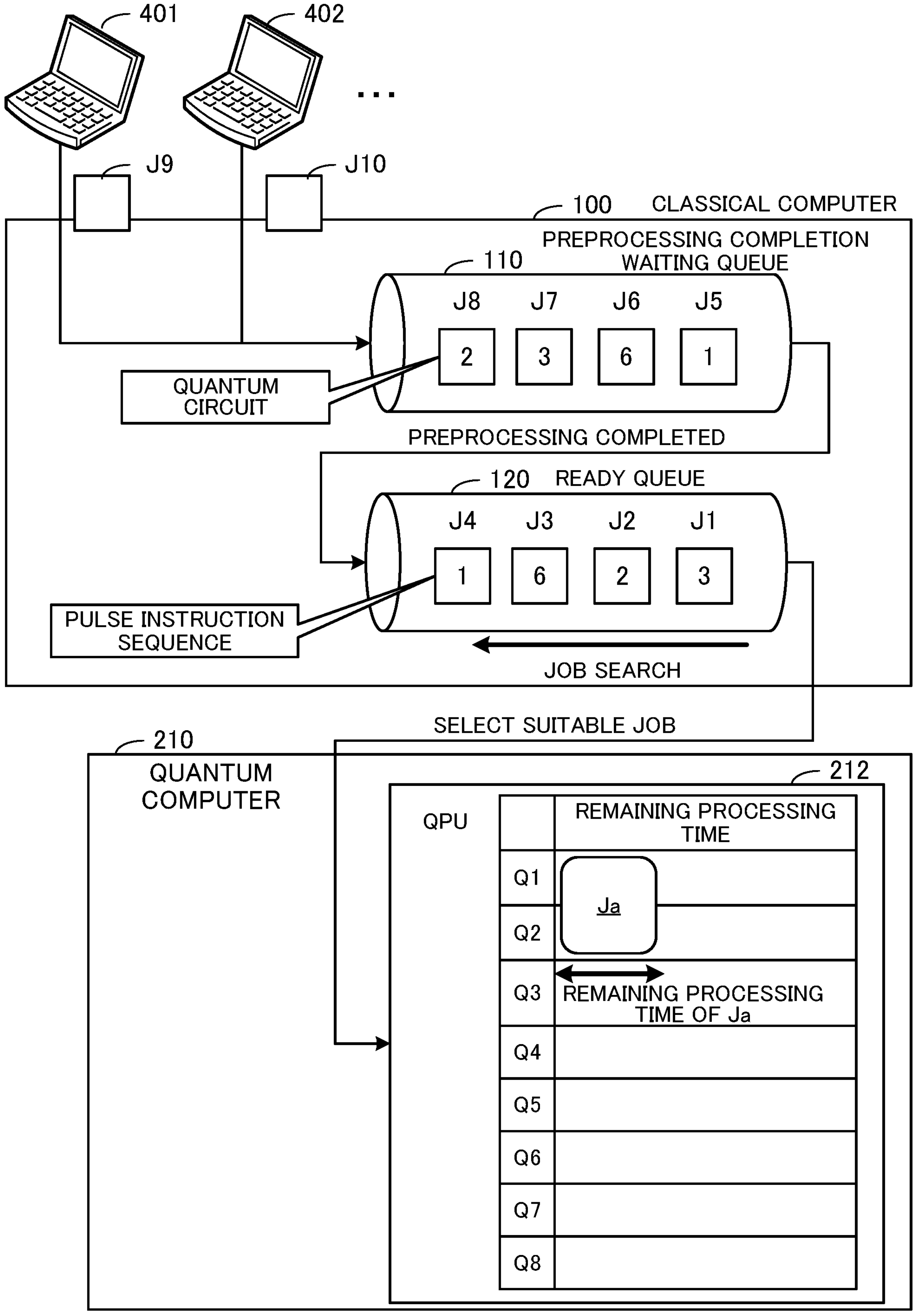
401
402
...
J9
J10
100
CLASSICAL COMPUTER
PREPROCESSING COMPLETION WAITING QUEUE
110
J8
J7
J6
J5
2
3
6
1
QUANTUM CIRCUIT
PREPROCESSING COMPLETED
120
READY QUEUE
J4
J3
J2
J1
1
6
2
3
PULSE INSTRUCTION SEQUENCE
JOB SEARCH
SELECT SUITABLE JOB
210
QUANTUM COMPUTER
212
QPU
REMAINING PROCESSING TIME
Q1
Q2
Ja
Q3
REMAINING PROCESSING TIME OF Ja
Q4
Q5
Q6
Q7
Q8

FIG. 11

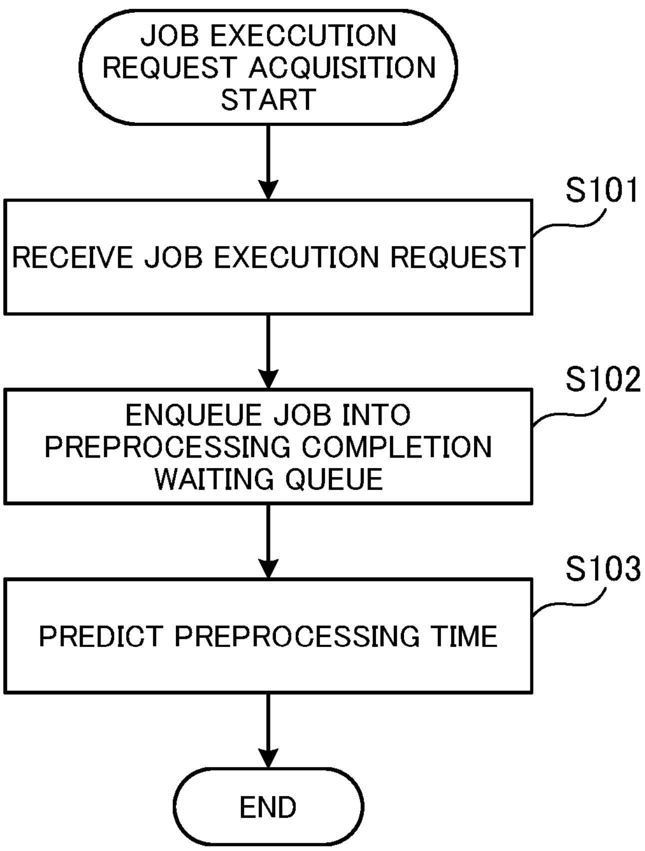
JOB EXECCUTION
REQUEST ACQUISITION
START
S101
RECEIVE JOB EXECUTION REQUEST
S102
ENQUEUE JOB INTO
PREPROCESSING COMPLETION
WAITING QUEUE
S103
PREDICT PREPROCESSING TIME
END

FIG. 12

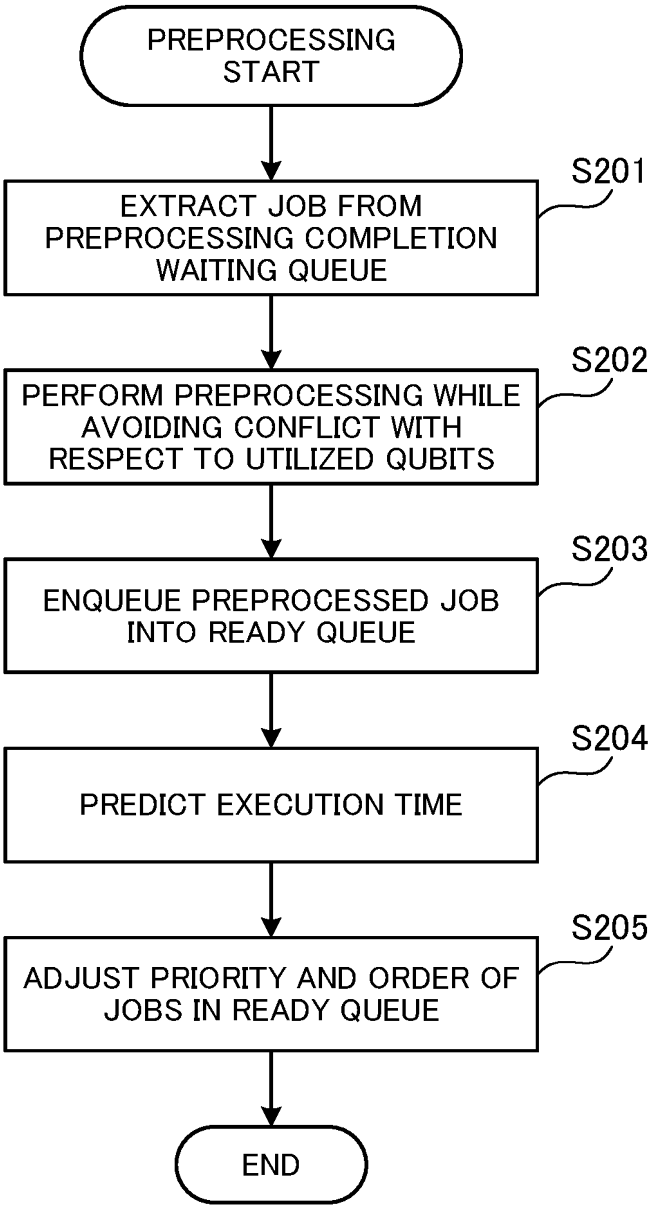
PREPROCESSING START
S201
EXTRACT JOB FROM PREPROCESSING COMPLETION WAITING QUEUE
S202
PERFORM PREPROCESSING WHILE AVOIDING CONFLICT WITH RESPECT TO UTILIZED QUBITS
S203
ENQUEUE PREPROCESSED JOB INTO READY QUEUE
S204
PREDICT EXECUTION TIME
S205
ADJUST PRIORITY AND ORDER OF JOBS IN READY QUEUE
END

FIG. 13

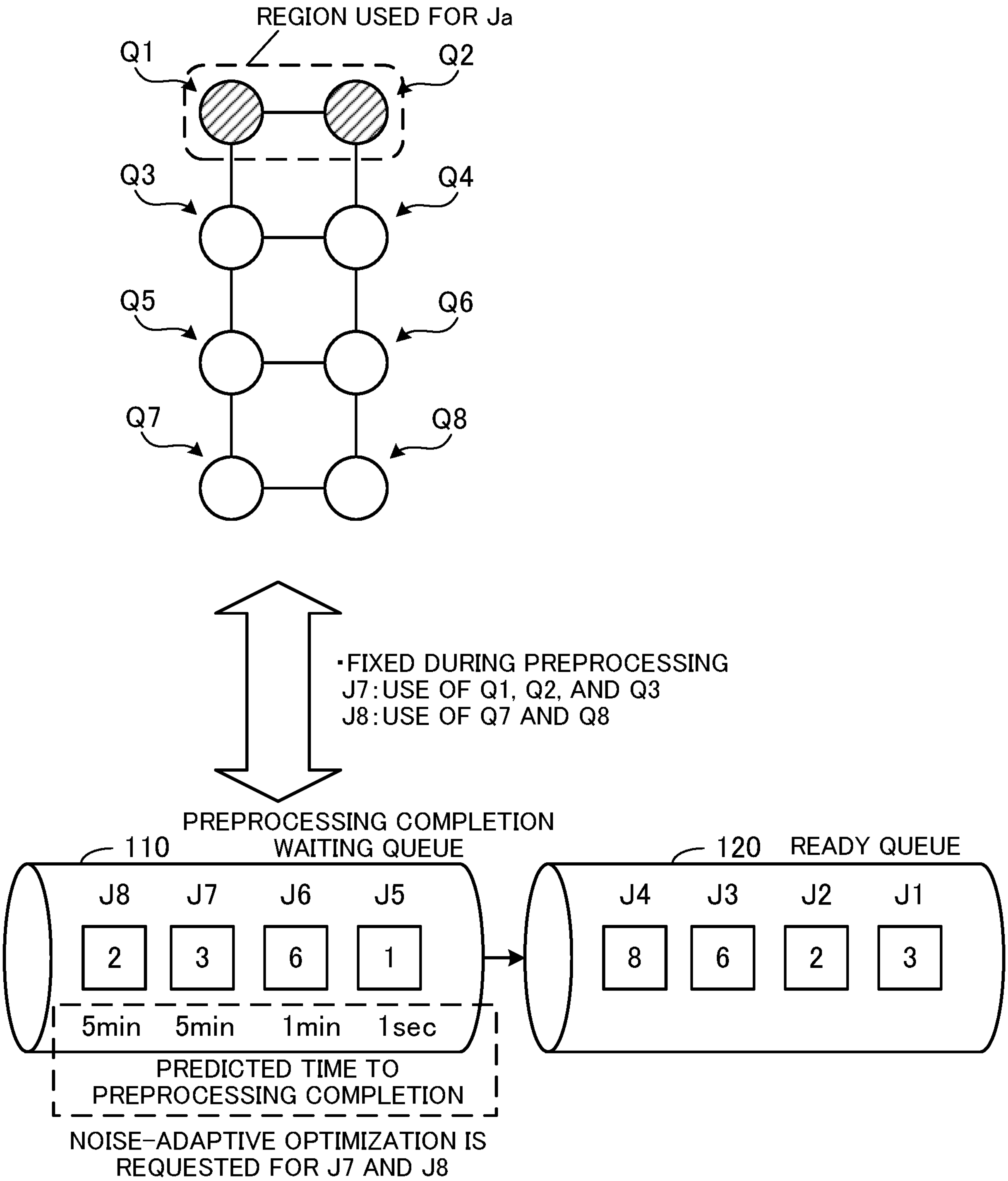
REGION USED FOR Ja
Q1
Q2
Q3
Q4
Q5
Q6
Q7
Q8
・FIXED DURING PREPROCESSING
J7:USE OF Q1, Q2, AND Q3
J8:USE OF Q7 AND Q8
PREPROCESSING COMPLETION WAITING QUEUE
110
J8
J7
J6
J5
2
3
6
1
5min
5min
1min
1sec
PREDICTED TIME TO PREPROCESSING COMPLETION
120
READY QUEUE
J4
J3
J2
J1
8
6
2
3
NOISE-ADAPTIVE OPTIMIZATION IS REQUESTED FOR J7 AND J8

FIG. 14

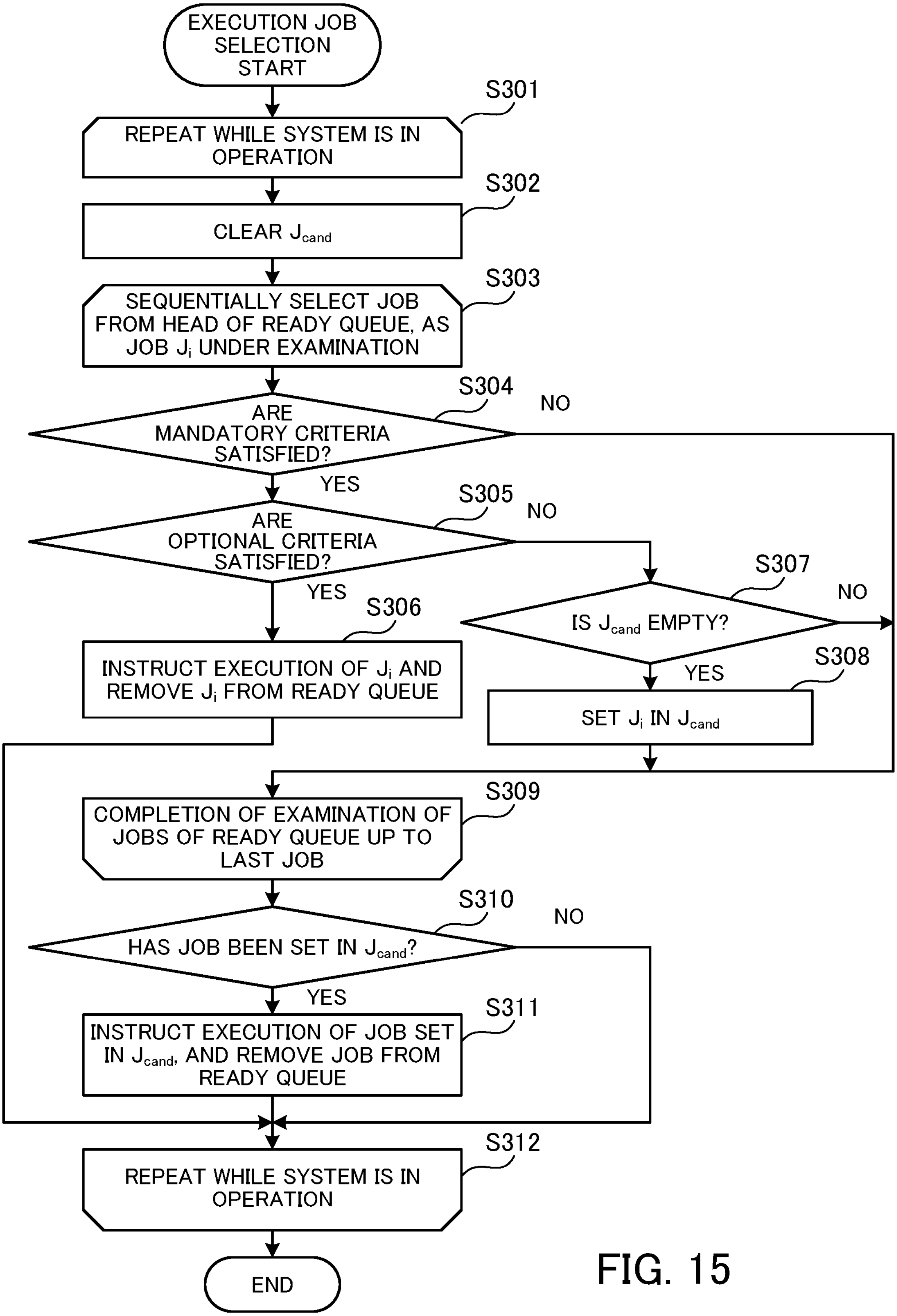
EXECUTION JOB SELECTION START
S301
REPEAT WHILE SYSTEM IS IN OPERATION
S302
CLEAR $J_{cand}$
S303
SEQUENTIALLY SELECT JOB FROM HEAD OF READY QUEUE, AS JOB $J_i$ UNDER EXAMINATION
S304
ARE MANDATORY CRITERIA SATISFIED?
NO
YES
S305
ARE OPTIONAL CRITERIA SATISFIED?
NO
YES
S306
INSTRUCT EXECUTION OF $J_i$ AND REMOVE $J_i$ FROM READY QUEUE
S307
IS $J_{cand}$ EMPTY?
NO
YES
S308
SET $J_i$ IN $J_{cand}$
S309
COMPLETION OF EXAMINATION OF JOBS OF READY QUEUE UP TO LAST JOB
S310
HAS JOB BEEN SET IN $J_{cand}$?
NO
YES
S311
INSTRUCT EXECUTION OF JOB SET IN $J_{cand}$, AND REMOVE JOB FROM READY QUEUE
S312
REPEAT WHILE SYSTEM IS IN OPERATION
END

FIG. 15

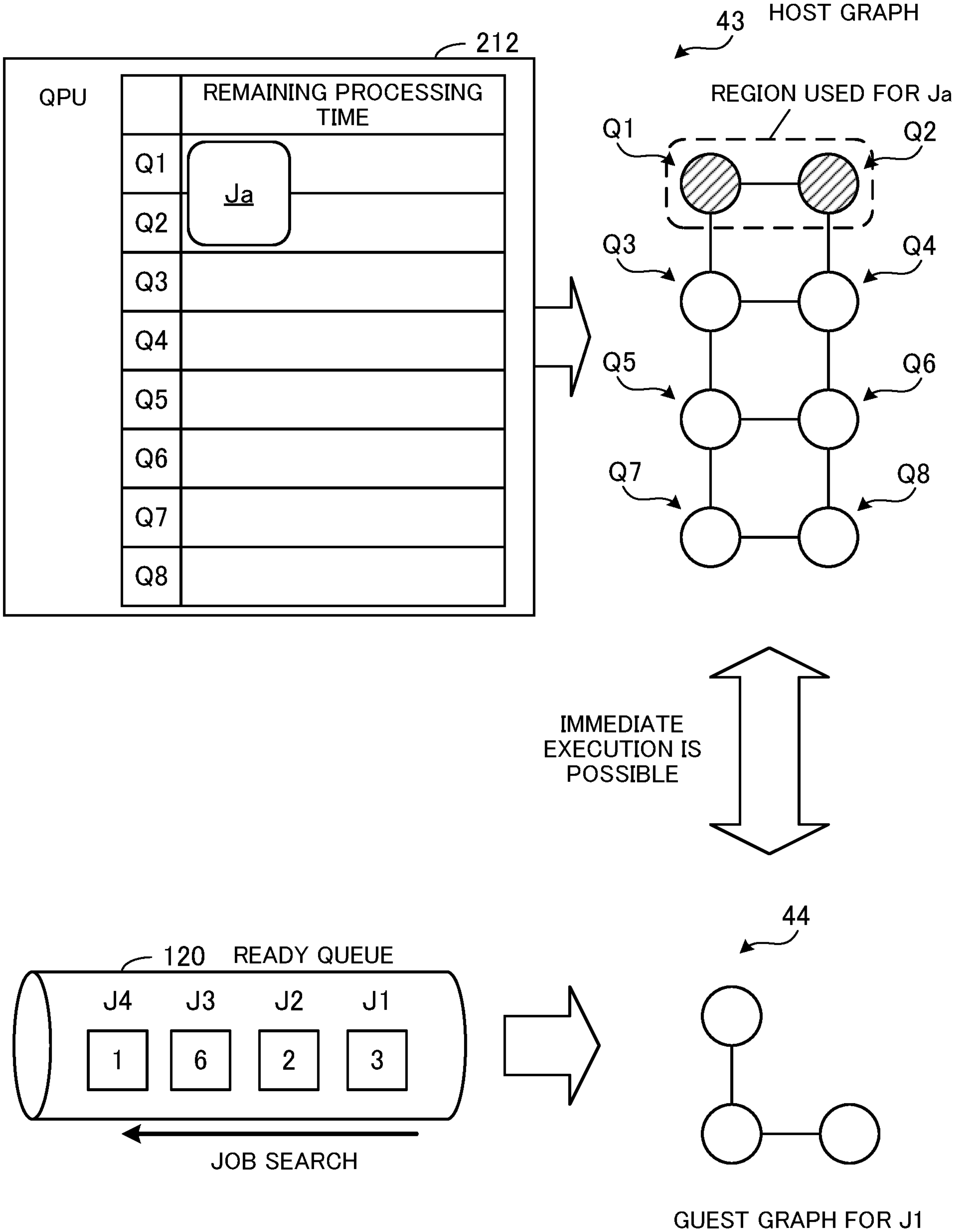

212
QPU
REMAINING PROCESSING TIME
Q1
Q2
Q3
Q4
Q5
Q6
Q7
Q8
Ja
43
HOST GRAPH
REGION USED FOR Ja
Q1
Q2
Q3
Q4
Q5
Q6
Q7
Q8
IMMEDIATE EXECUTION IS POSSIBLE
120
READY QUEUE
J4
J3
J2
J1
1
6
2
3
JOB SEARCH
44
GUEST GRAPH FOR J1


FIG. 16

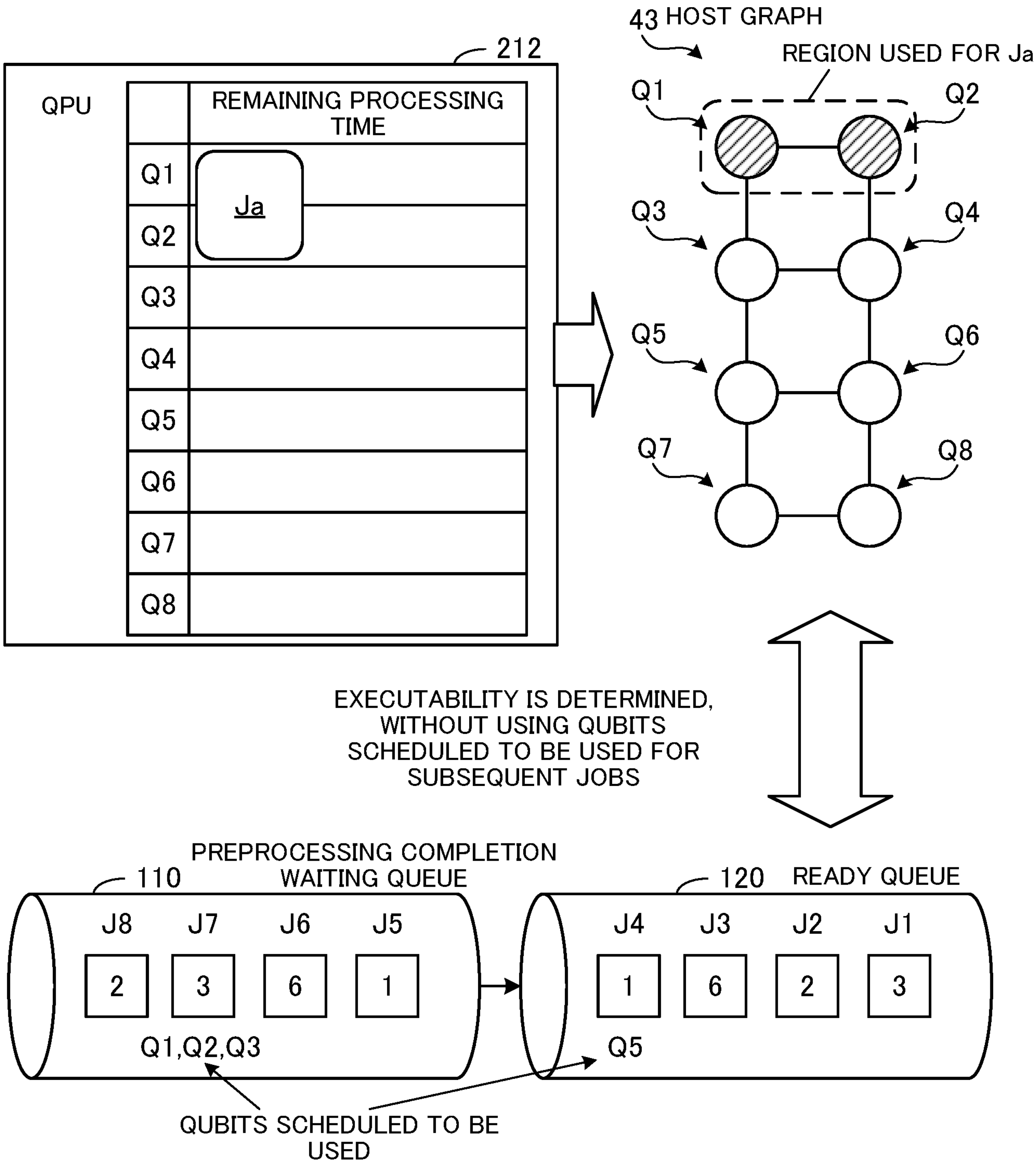
43 HOST GRAPH
REGION USED FOR Ja
Q1
Q2
Q3
Q4
Q5
Q6
Q7
Q8
212
QPU
REMAINING PROCESSING TIME
Q1
Q2
Q3
Q4
Q5
Q6
Q7
Q8
Ja
EXECUTABILITY IS DETERMINED, WITHOUT USING QUBITS SCHEDULED TO BE USED FOR SUBSEQUENT JOBS
110
PREPROCESSING COMPLETION WAITING QUEUE
J8
J7
J6
J5
2
3
6
1
Q1,Q2,Q3
120
READY QUEUE
J4
J3
J2
J1
1
6
2
3
Q5
QUBITS SCHEDULED TO BE USED

FIG. 17

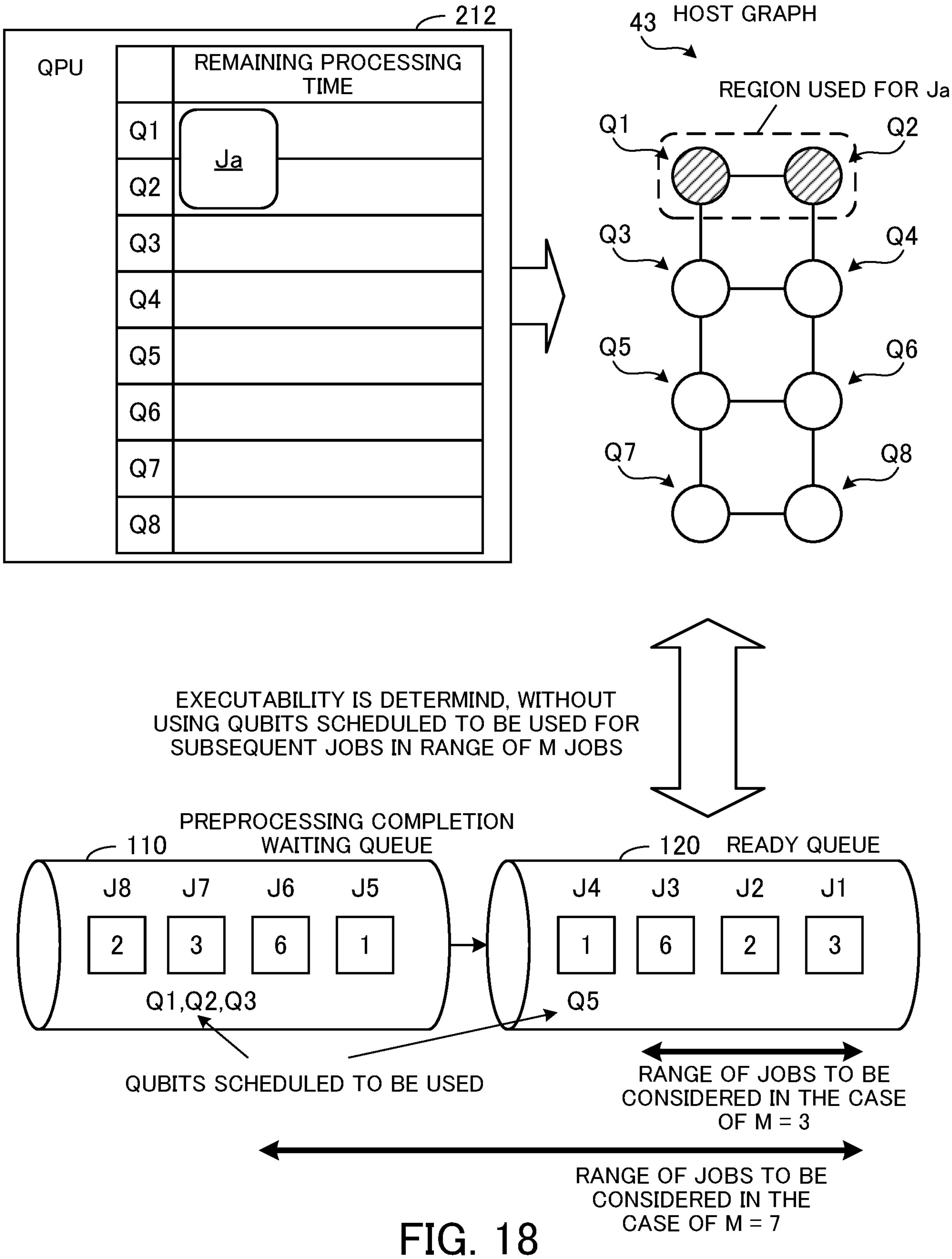
212
QPU
REMAINING PROCESSING TIME
Q1
Q2
Ja
Q3
Q4
Q5
Q6
Q7
Q8
43
HOST GRAPH
REGION USED FOR Ja
Q1
Q2
Q3
Q4
Q5
Q6
Q7
Q8
EXECUTABILITY IS DETERMIND, WITHOUT USING QUBITS SCHEDULED TO BE USED FOR SUBSEQUENT JOBS IN RANGE OF M JOBS
PREPROCESSING COMPLETION WAITING QUEUE
110
J8 J7 J6 J5
2 3 6 1
Q1,Q2,Q3
120
READY QUEUE
J4 J3 J2 J1
1 6 2 3
Q5
QUBITS SCHEDULED TO BE USED
RANGE OF JOBS TO BE CONSIDERED IN THE CASE OF M = 3
RANGE OF JOBS TO BE CONSIDERED IN THE CASE OF M = 7

FIG. 18

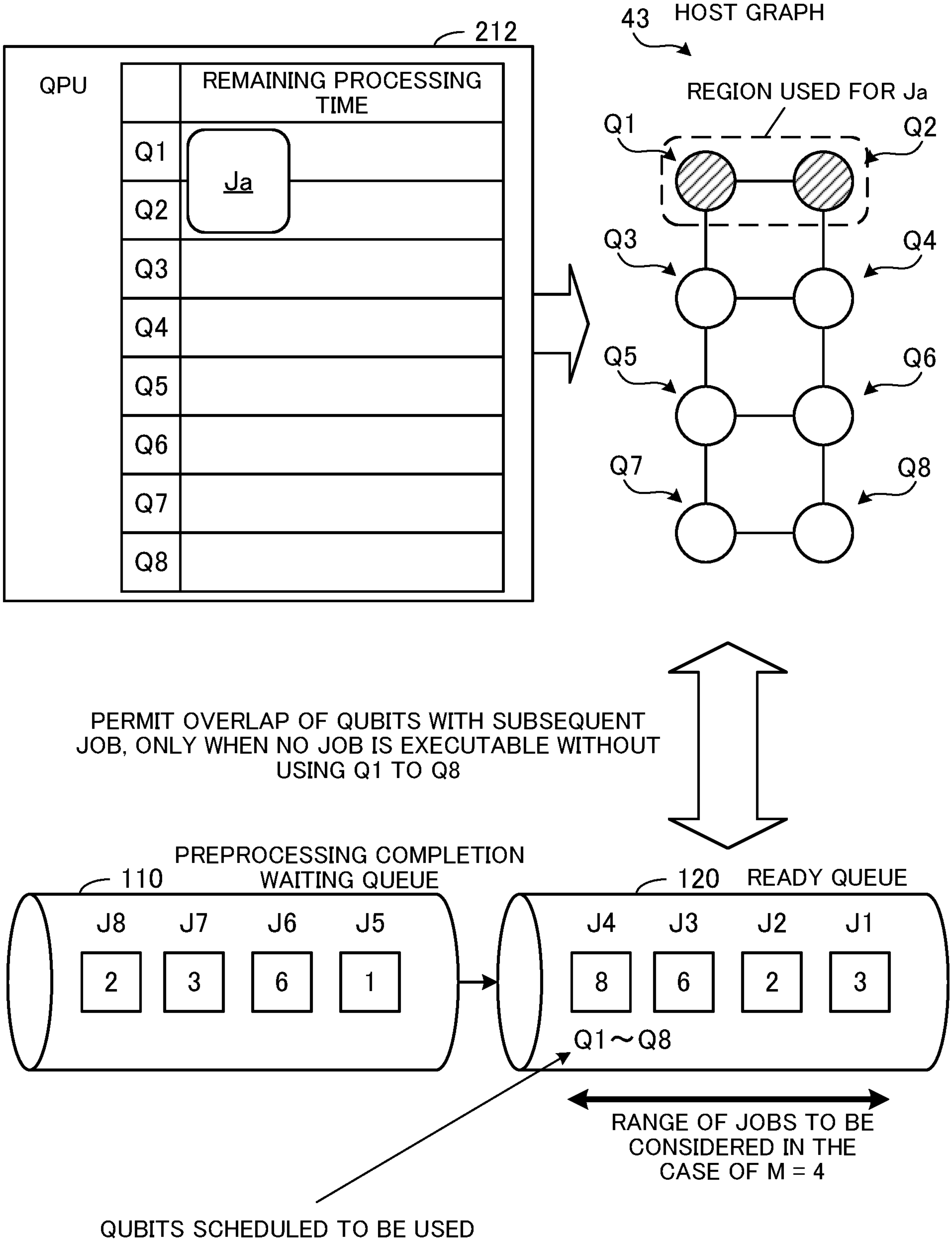

212
QPU
REMAINING PROCESSING TIME
Q1
Q2
Ja
Q3
Q4
Q5
Q6
Q7
Q8
43 HOST GRAPH
REGION USED FOR Ja
Q1
Q2
Q3
Q4
Q5
Q6
Q7
Q8
PERMIT OVERLAP OF QUBITS WITH SUBSEQUENT JOB, ONLY WHEN NO JOB IS EXECUTABLE WITHOUT USING Q1 TO Q8
110 PREPROCESSING COMPLETION WAITING QUEUE
J8 J7 J6 J5
2 3 6 1
120 READY QUEUE
J4 J3 J2 J1
8 6 2 3
Q1～Q8
RANGE OF JOBS TO BE CONSIDERED IN THE CASE OF M = 4
QUBITS SCHEDULED TO BE USED


FIG. 19

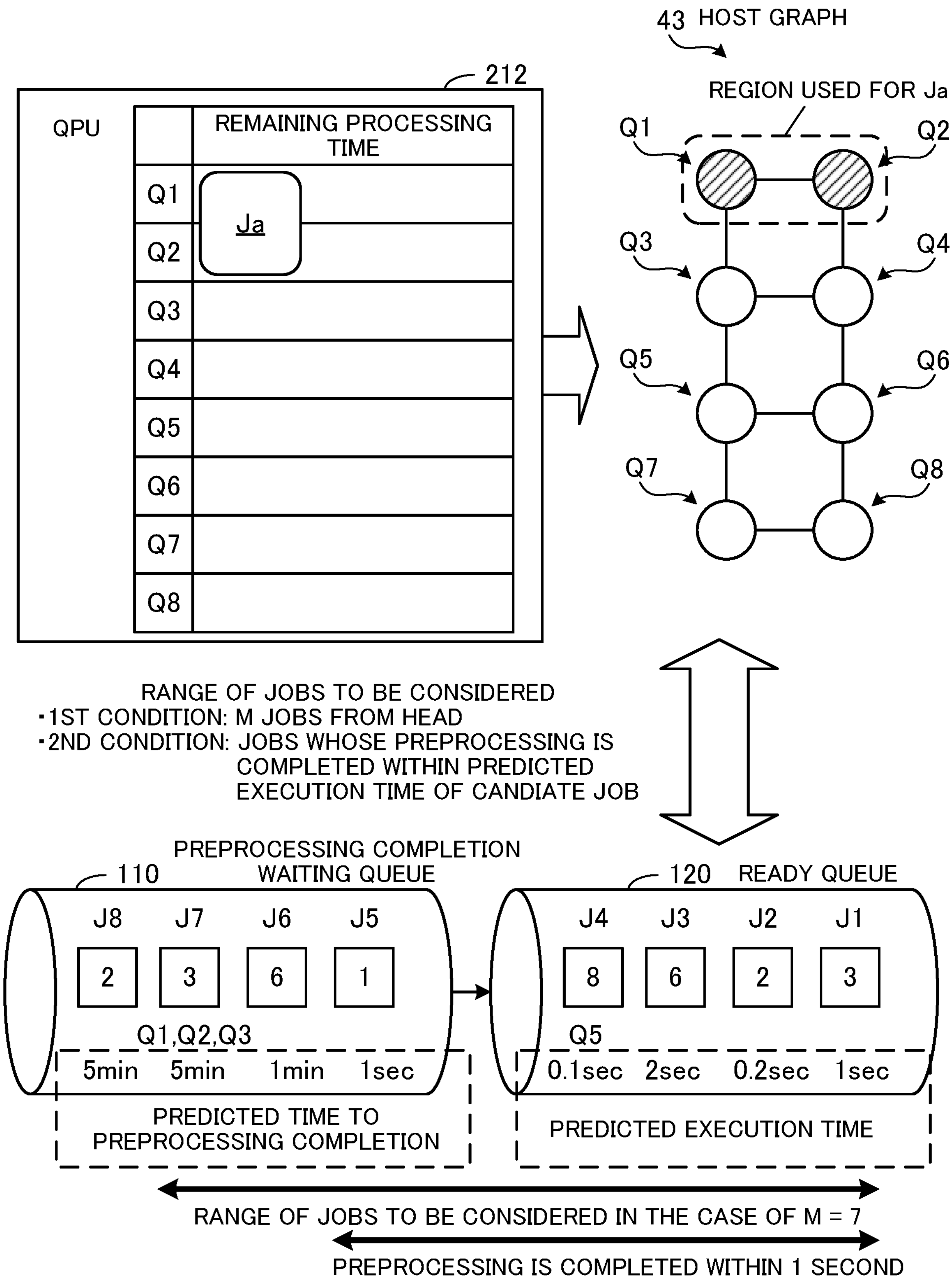

43 HOST GRAPH
212
QPU
REMAINING PROCESSING TIME
Q1
Q2
Ja
Q3
Q4
Q5
Q6
Q7
Q8
REGION USED FOR Ja
RANGE OF JOBS TO BE CONSIDERED
·1ST CONDITION: M JOBS FROM HEAD
·2ND CONDITION: JOBS WHOSE PREPROCESSING IS COMPLETED WITHIN PREDICTED EXECUTION TIME OF CANDIATE JOB
PREPROCESSING COMPLETION WAITING QUEUE
110
J8
J7
J6
J5
2
3
6
1
Q1,Q2,Q3
5min
5min
1min
1sec
PREDICTED TIME TO PREPROCESSING COMPLETION
120
READY QUEUE
J4
J3
J2
J1
8
6
2
3
Q5
0.1sec
2sec
0.2sec
1sec
PREDICTED EXECUTION TIME
RANGE OF JOBS TO BE CONSIDERED IN THE CASE OF M = 7
PREPROCESSING IS COMPLETED WITHIN 1 SECOND


FIG. 20

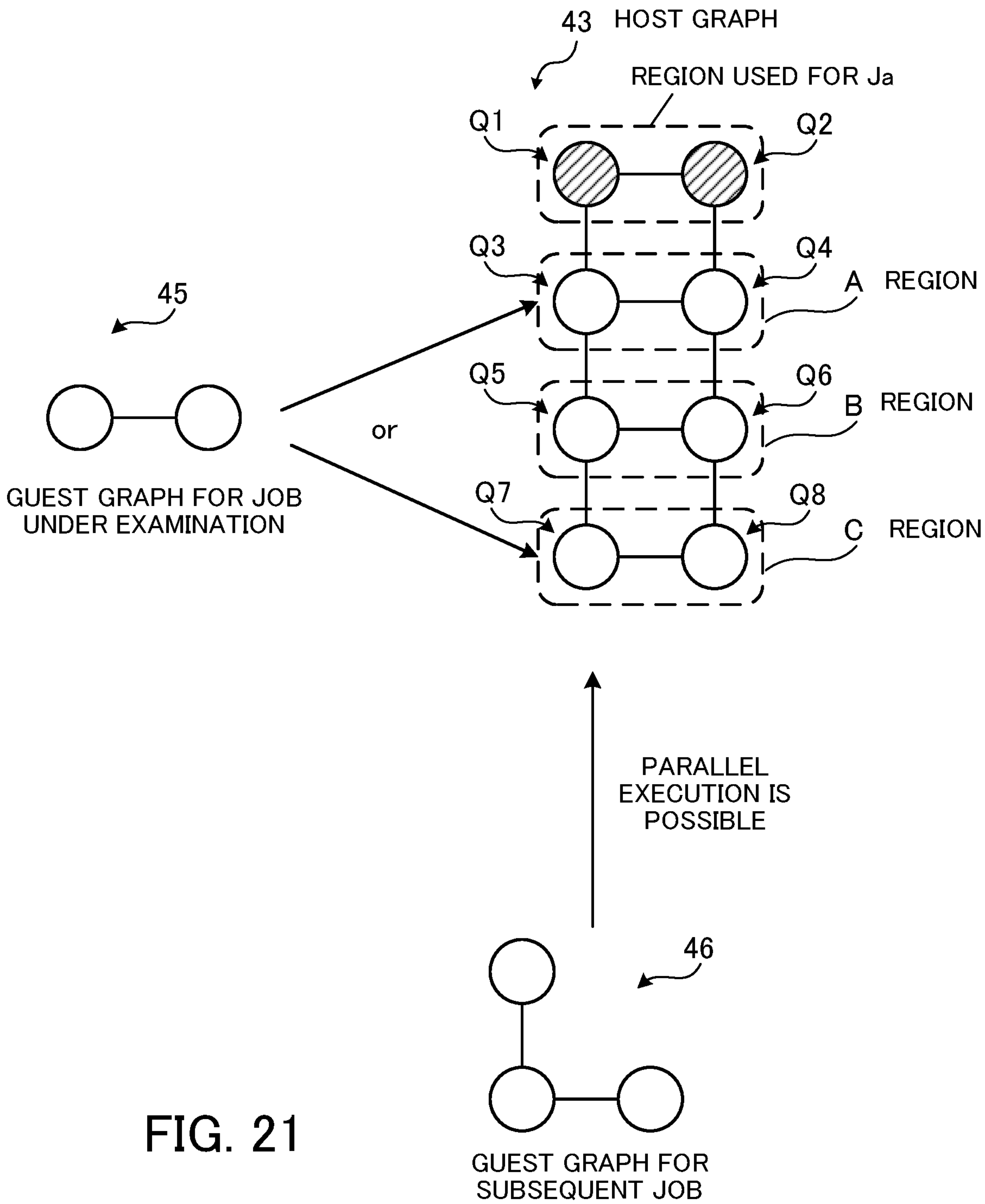
43 HOST GRAPH
REGION USED FOR Ja
Q1
Q2
Q3
Q4
A REGION
45
Q5
Q6
B REGION
or
GUEST GRAPH FOR JOB
UNDER EXAMINATION
Q7
Q8
C REGION
PARALLEL
EXECUTION IS
POSSIBLE
46
GUEST GRAPH FOR
SUBSEQUENT JOB

FIG. 21

○ PREDICETED OUTPUT RELIABILITY $= r_{2q}^{\#2q_gates} \, r_{1q}^{\#1q_gates} \, r_{ro}^{\#qubits}$

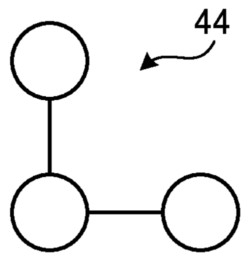


GUEST GRAPH FOR J1

#1q_gates = 10
#2q_gates = 4
#qubits = 3

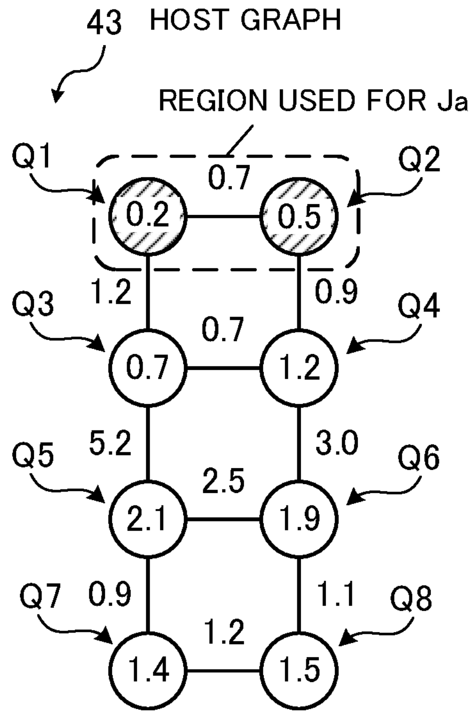


| UTILIZED QUBIT | PREDICTED OUTPUT RELIABILITY |
|---|---|
| Q1,Q2,Q3 | 0.950 |
| Q5,Q7,Q8 | 0.912 |
| Q6,Q7,Q8 | 0.912 |
| Q3,Q4,Q6 | 0.894 |
| ... | ... |

FIG. 22

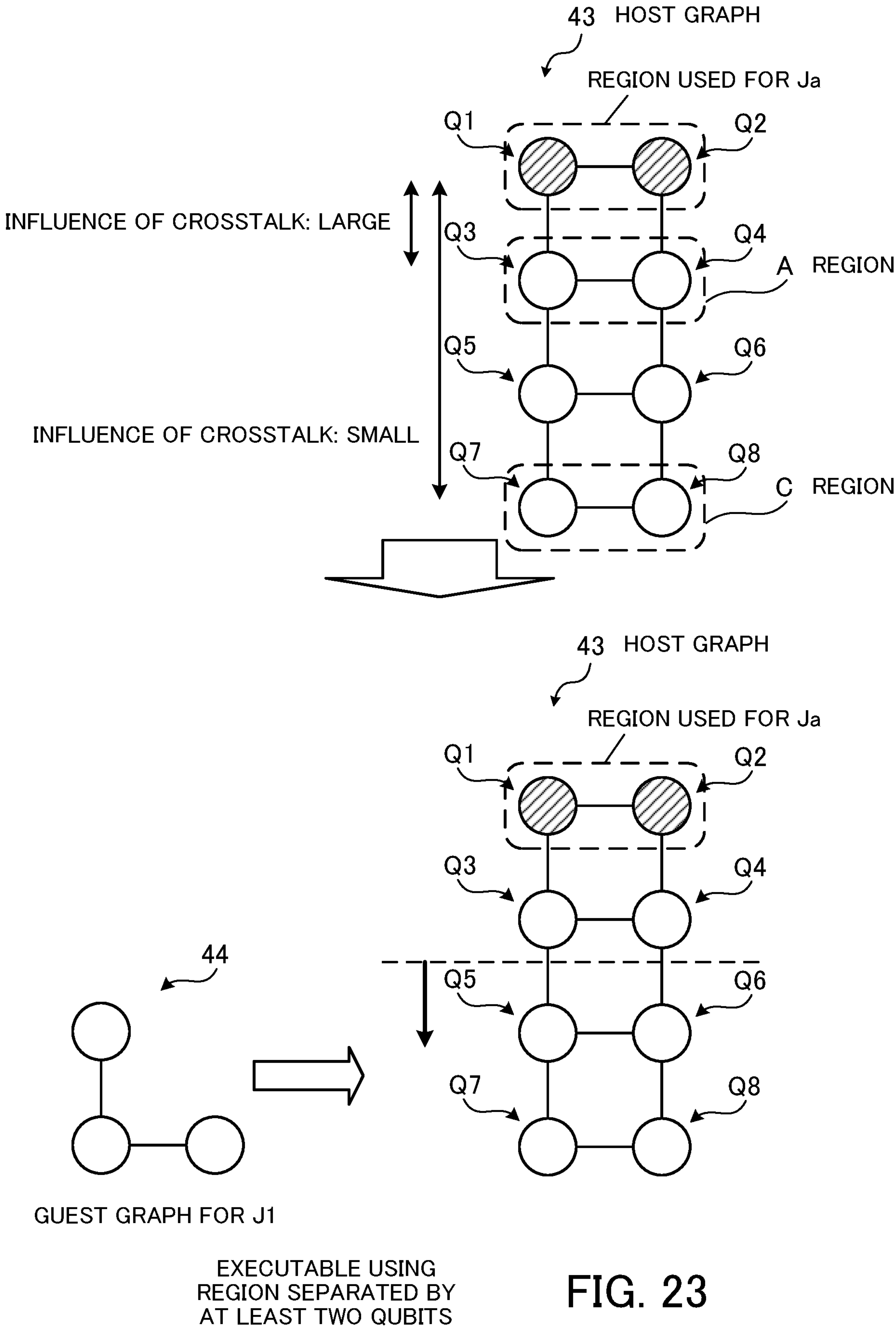
43 HOST GRAPH
REGION USED FOR Ja
Q1
Q2
INFLUENCE OF CROSSTALK: LARGE
Q3
Q4
A REGION
Q5
Q6
INFLUENCE OF CROSSTALK: SMALL
Q7
Q8
C REGION
43 HOST GRAPH
REGION USED FOR Ja
Q1
Q2
Q3
Q4
44
Q5
Q6
Q7
Q8
GUEST GRAPH FOR J1
EXECUTABLE USING
REGION SEPARATED BY
AT LEAST TWO QUBITS

FIG. 23

## INTERNATIONAL SEARCH REPORT

International application No.
**PCT/JP2023/026491**

**A. CLASSIFICATION OF SUBJECT MATTER**

***G06N 10/80***(2022.01)i; ***G06F 9/48***(2006.01)i
FI: G06N10/80; G06F9/48 300A

According to International Patent Classification (IPC) or to both national classification and IPC

**B. FIELDS SEARCHED**

Minimum documentation searched (classification system followed by classification symbols)

G06N10/00-10/80; G06F9/48

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | US 2020/0125402 A1 (RED HAT, INC.) 23 April 2020 (2020-04-23)<br>entire text, all drawings | 1-11 |
| A | LIU, L. et al. QuCloud: A New Qubit Mapping Mechanism for Multi-programming Quantum Computing in Cloud Environment. 2021 IEEE International Symposium on High-Perform ance Computer Architecture (HPCA) [online]. 2021, pp. 167-178, [retrieved on 25 September 2023], Retrieved from the Internet: <URL: https://ieeexplore.ieee.org/document/9407180>, <DOI: 10.1109/HPCA51647.2021.00024><br>entire text, all drawings | 1-11 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **25 September 2023** | **03 October 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | <br>Telephone No. |

Form PCT/ISA/210 (second sheet) (January 2015)

**INTERNATIONAL SEARCH REPORT**
**Information on patent family members**

International application No.
**PCT/JP2023/026491**

| Patent document cited in search report | Publication date (day/month/year) | Patent family member(s) | Publication date (day/month/year) |
|---|---|---|---|
| US 2020/0125402 A1 | 23 April 2020 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2021125189 A
- US 20020201655
- JP 2022511613 A